# EUROPEAN PATENT SPECIFICATION

(11) **EP 0 766 167 B1**
(45) Date of publication and mention of the grant of the patent: **26.11.2003**
(21) Application number: 96306694.9
(22) Date of filing: 16.09.1996
(51) Int. Cl.: G06F 1/32

(54) **Power management of an information processing system**
Leistungssteuerung eines Informationsverarbeitungssystems
Gestion d'alimentation de système de traitement d'information

(30) Priority: 26.09.1995 JP 24715295; 26.10.1995 JP 27890495
(43) Date of publication of application: 02.04.1997
(73) Proprietor: INTERNATIONAL BUSINESS MACHINES CORPORATION, Armonk, NY 10504 (US)
(72) Inventor: Inui, Takashi, Yokohama-shi, Kanagawa-ken (JP); Kawano, Seiichi, Sagamihara-shi, Kanagawa-ken (JP); Matsushima, Shinji, Yokohama-shi, Kanagawa-ken (JP); Nakano, Masayoshi, Yokohama-shi, Kanagawa-ken (JP); Shiraishi, Yuichi, Yamato-shi, Kanagawa-ken (JP)
(74) Representative: Moss, Robert Douglas

(56) References cited:
- US-A- 5 369 771
- US-A- 5 404 546

## Description

### Field of the Invention

The present invention relates to an information processing system, such as a personal computer (PC) with a power saving function.

### Background of the Invention

As progress in the current technique continues, various types of personal computers (hereafter referred to as "PCs" or "systems"), such as desktop and notebook computers, are being manufactured and sold. The notebook PCs that are being manufactured are compact and light, since for their design, portability, and outdoor use are taken into consideration.

### Power management of a personal computer:

One of the features of notebook PCs is that they are battery operated and can be driven by an incorporated battery. Such a system can be used at sites where there are no commercially available power sources. A battery that is incorporated in a notebook PC is commonly formed as a "battery pack", which is a package that is comprised of a plurality of rechargeable battery cells (also called a "secondary cell"), such as Ni-Cd, NiMH, or Li-Ion. Although such a battery pack is reusable by being charged, its duration for powering a notebook PC is only two to three hours. Therefore, various ideas for power saving have been implemented in order to extend the duration of the incorporated battery pack. The power saving function can be another feature of notebook PC.

At present, from an ecological point of view, the demand for power saving is increasing, even for desktop PCs to which power can be supplied almost endlessly by commercially available power sources. And in June 1993, the U.S. Environmental Protection Agency (EPA) advocated the self-control action that is called the "Energy Star Computer Program", and required that power consumed in the standby state be less than a predetermined value (driving power is to be 30 W or lower, or 30% or less than it is when the CPU is active). Computer makers have developed and manufactured products that conform to the restriction suggestions. For example, desktop PCs that have a power saving function are already sold by IBM Japan, Ltd. (e.g., the PS/55E (for which "Green PC" is a common name), IBM PC 750, and the Aptiva series ("Aptiva" is a trademark of IBM Corp.)).

Power saving with a PC can be accomplished by, for example, reducing power consumption of the individual electric circuits during the operation. Power savings can also be provided by reducing or halting, as needed, the power supply to the individual electric circuits (or devices) in accordance with the reduction of their activity. The latter power saving function may especially be called a "Power Management" function.

The power management modes of a PC are, for example, an "LCD backlight-OFF" mode and an "HDD-OFF" mode, which halts the power supply to devices, such as an LCD (Liquid Crystal Display) and its backlight, or an HDD (hard disk drive), that account for the greatest share of the total power consumption by a full system. The other example power management modes are a "CPU slow clock/stop clock" mode, in which the operating frequency of a CPU (Central Processing Unit) is reduced or the operation of the CPU is halted, and a "Suspend" mode. Suspend function is that the power supply to all the electric circuits, except for a main memory, is halted after the necessary data are saved in the main memory.

### Power management function of a CPU:

As is well known, CPUs are the units that constitute the nuclei for the computations that are performed by computer systems. Recently, according to the improvement of techniques for manufacturing semiconductor devices, as is demonstrated by the reduction in the wiring width, the operational frequencies of CPUs have increased even more. For example, there have appeared CPU chips that can be driven at operational frequencies that exceed 100 MHz. One example is the "Pentium" sold by Intel Corp., and another example is the "PowerPC" ("PowerPC" is a trademark of IBM Corp. PowerPC is jointly developed by IBM Corp., Motorola Corp. and Apple Corp.). The performance of a CPU and its operating frequency are very closely related. And as the operational speed of a CPU rises, the calculating speed also increases accordingly. A fast CPU demonstrates its excellent capability especially when running large application programs and when performing graphics procedures.

But nothing is perfect, the high processing speed of the CPU brings several problems. One of the problems concerns the increased power consumption by the CPUs and the consequent heat generation. As the intensity of a current that flows across a transistor (i.e., a resistor) per unit time increases, the power consumption and the heat generation also increase. Theoretically, the power that is consumed by a CPU is proportional to the operating frequency. Currently, the ratio of the power consumption of a CPU to the total power consumption by the system can not be not ignored.

The power management functions of the CPU, such as the "CPU slow-clock/stop-clock," are provided to overcome the above described condition. The "slow-clock" and the "stop-clock" are modes in which, when it is determined that CPU is in the standby state because key input or mouse input has not been performed for more than a predetermined time, power consumption is reduced by lowering the operating frequency of the CPU, or by halting its operation (i.e., the performance of the CPU is lowered). However, it should be noted that the performance of the CPU can be lowered only up to the point at which neither turn-around time (i.e., the time that elapses from the reception of a request until the generation of an affirmative response) nor through-put (the amount of jobs per unit time) is reduced.

### Slow clock:

The slow clock function of the CPU can be achieved by changing the frequency of a clock signal that is inputted by an external device (for example, an oscillator). This function can also be achieved by changing a CPU chip's internal operating frequency while maintaining a constant externally input clock frequency. A high speed processing CPU ordinarily receives a relatively low clock signal (for example, 66 MHz) and internally increases the speed of an operation clock (to, for example, 133 MHz) by using an incorporated PLL (Phase Lock Loop) circuit. Such a CPU is a so-called "double speed" chip. It is difficult for this type of CPU to drastically change a clock frequency that is inputted by an external device because of the operating property of a PLL circuit (e.g., there is a wait of several milliseconds before a phase lock loop is locked). Therefore, with another method, for a CPU chip that incorporates both a PLL circuit and a slow clock function, the PLL circuit increases an inputted clock speed while the internal slow clock function autonomously lowers the performance of the CPU.

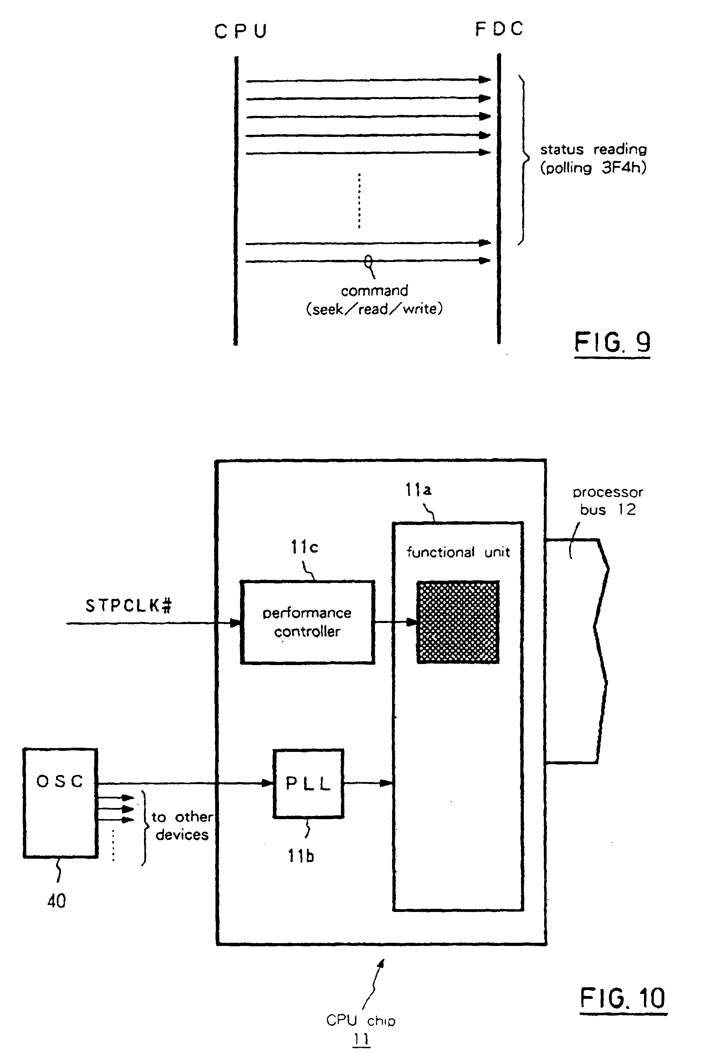

Fig. 10 is a schematic diagram illustrating the arrangement of a CPU that incorporates a power management function. In Fig. 10, a CPU chip 11 comprises a functional unit 11a that actually performs computation; a PLL circuit 11b that produces, to the functional unit 11a, an operation clock signal for synchronous driving; and a performance controller 11c that controls the performance of the functional unit 11a. The CPU chip 11 communicates with its peripheral devices (not shown) via a processor bus 12.

The function of a PLL circuit whereby the frequency of an input clock signal is multiplied is well known. The PLL circuit 11b accelerates the speed of a relatively slow clock signal (66 MHz, for example) that is inputted from OSC 40 to an operating frequency (133 MHz, for example), and supplies the doubled clock signal to the functional unit 11a.

The functional unit 11a can be divided into a calculation unit (a double shaded portion in Fig. 10) and an internal cache/control unit. The calculation unit is a section whose performance can, to a degree, be reduced in accordance with the activity of the system. The internal cache/control unit is a section that must respond to requests, such as a cache snoop, an interrupt request (INTR/NMI/SMI), or a hold request (HOLD) , that is issued in a time critical manner and unperiodically, and, thus, its performance can not be easily reduced, even if the activity of the system is lowering.

The performance controller 11c controls the performance of the functional unit 11a in response to a control signal STPCLK# that is received from an external device. More specifically, while the STPCLK# is active (i.e., low), the controller 11c halts the supply of the operating clock signal to the calculation unit (the double shaded portion in Fig. 10) in the functional unit 11a. The CPU chip 11 is so designed that its performance can be reduced partially. As a modification method, the STPCLK# that is to be inputted to the performance controller 11c is intermittently changed to active (i.e., goes low) to reduce the frequency of the operation clock supplied by the PLL circuit 11b. For example, if the STPCLK# is set active (i.e., goes low) for a predetermined cycle and then the frequency of the operation clock is reduced by one of n times, the performance and power consumption of the calculation unit is reduced to about (n-1)/n. The function that intermittently drives the STPCLK# input operation is generally called "Clock Throttling" or "Frequency Emulation". The STPCLK# is one of the control signals on the processor bus 12.

In the slow clock mode, the input clock from the oscillator 40 and the operation of the PLL circuit 11b are not changed from those in the normal high speed operational mode. Therefore, recovery from the slow clock mode to the normal mode can be performed relatively rapidly.

SL enhanced Intel 486, DX2s, DX4s, and Pentiums, which are chips that have succeeded the "80486" CPU chip from Intel Corp., have the power saving function that is shown in Fig. 10. These chips include the STPCLK# as one of the central signals on the processor bus 12.

### Stop clock:

The "stop clock" function is the one in which all clock input is prevented and in which the entire functional unit is halted. The complete stopping of the operational clock can be accomplished by a fully static configuration of the CPU in which a storing and saving function is not required. During the "stop clock" mode, the power consumption of the CPU is, at most, several hundreds of mW.

Since the PLL circuit 11b is also halted in the stop clock mode, a delay time of approximately 1 msec is required to stabilize the operation of the PLL circuit 11b (lock the phase) to recover to the normal high speed mode.

The power management operation, such as the slow clock/stop clock of the CPU, is commonly accomplished by cooperative functions involving hardware, which is provided outside of the CPU chip, that monitors the state of the system, and software executed by the CPU.

A specific software example for achieving the power management is the "APM" (Advanced Power management) that is jointly proposed by Intel Corp. and Microsoft Corp. The APM takes effect in the OS (Operating System) environment that is compatible with to the APM. The APM compatible OS environment is a system that is constituted by 1) hardware for which power saving is required, 2) a BIOS (also called an "APM BIOS") that actually performs the hardware operations required for power management, 3) an OS that can call the APM BIOS as the operational state (activity) of the system becomes lowered, and 4) an application that is compatible with the APM. For 1), the hardware is, for example, a CPU chip that has a slow clock/stop clock function. For 3), the APM compatible OS is, for example, PC DOS J6.1/V or any succeeding version, OS/2 J2.1 or any succeeding version ("OS/2" is a trademark of IBM Corp.), or Windows J3.1 or any succeeding version. The APM compatible OS generally includes an "APM" driver that calls an APM BIOS. For 4), the APM compatible application is an application program that registers itself in the APM driver via an API (Application Program Interface) to receive an inquiry for the start of the power management operation and to provide an affirmative response to the inquiry.

When software, such as the APM, that is resident in the OS is employed, the power management operation of the CPU involves the following procedures:
(1) When there is no effective task to be executed in a queue of a scheduler ("scheduler" is one of the modules in the OS), i.e., the system must wait for a next effective task to occur, it is ascertained that the CPU is in the idle state.
(2) In response to the detection of the idle state of the CPU, the APM driver calls the APM BIOS. The APM driver may exchange, with the APM application, the inquiry and the affirmative response for the start of power management.
(3) The APM BIOS, upon the call, performs hardware operation to shift the system to the power management state. For example, the APM BIOS performs intermittent throttling of the STPCLK# in order to shift the system to the slow clock state, or halts the input of a clock to the CPU chip 11 in order to shift the system to the stop clock state.

Since the OS can employ its own scheduler and can detect information in advance to the effect that "the system will enter the operation standby state", the power management operation can be efficiently carried out by a method using the APM.

The OS, however, can control only its own system. The OS can have no knowledge of the operational state, for example, of another independent apparatus (another PC) with which the system is physically connected and is communicating with via a communication port (a serial port or a parallel port). That is, the OS can manage a task for transmitting data from its own system, but can not detect an event wherein another independent apparatus has begun data transmission. Since data transfer is performed at a relatively high speed, the CPU must be fully active in order not to miss the data transfer. For example, if the CPU is in the slow clock state when another apparatus begins data transmission, some delay is caused in a data reception process performed by the CPU and data will be lost. And if the CPU is in the stop clock state when another apparatus begins data transmission, even though the CPU is to be recovered to the normal mode in response to the data reception, it takes some time before the operation of the CPU is stabilized, as is previously described, and the data transmitted to the CPU during that time will be lost. In short, if only the internal state of its own system is taken into consideration and the power management operation is begun by preference merely because the queue in the OS is empty, data exchanged will be lost, and as a result, the security of the system will be substantially degraded.

Another problem that arises as the processing speed of a CPU becomes greater is that there is an increase in the differences between the operating speeds of the CPU and external devices (a main memory and other peripheral devices). When the speed of the CPU is increased, the speed increase is useless unless the peripheral devices are so designed as to match the increased speed of the CPU; however, it is difficult to eliminate the speed gap between them. For example, the operations performed by a hard disk drive includes mechanical operations such as a magnetic head seek, so that any increase in its processing speed is limited. As a result, almost all the peripheral devices are operated asynchronously with the CPU. The communication speed between the CPU and the peripheral devices is determined in accordance with the lower speed of the peripheral devices, so that the CPU is always waiting.

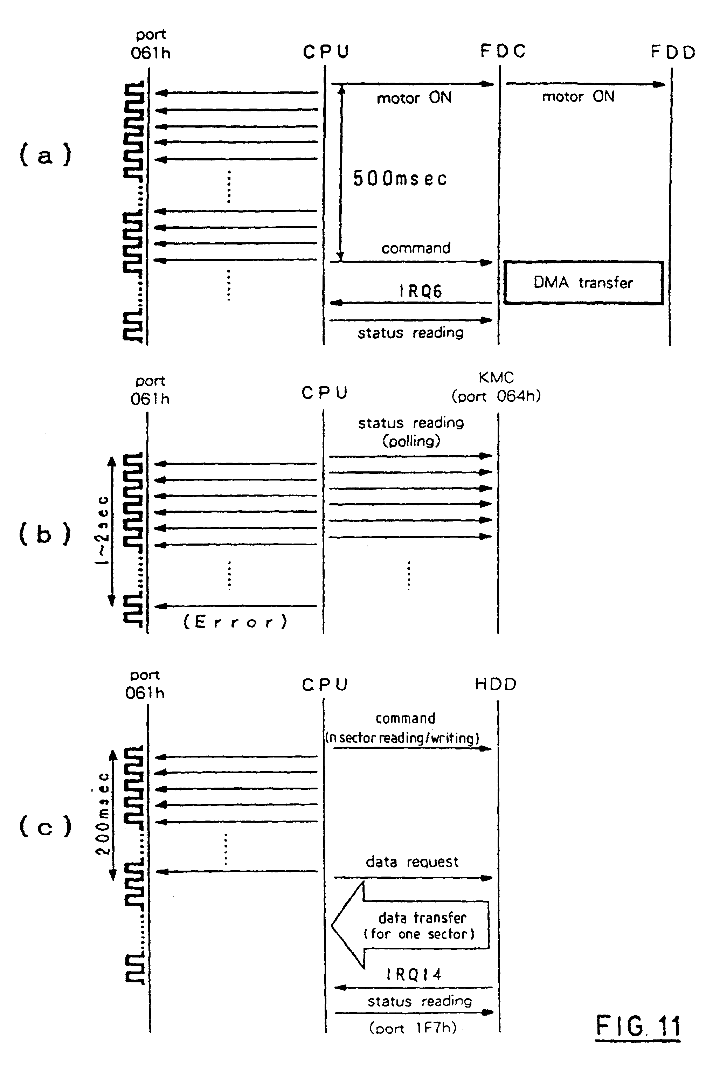

Normally, asynchronous communication between devices is facilitated by handshaking (i.e., by acquiring the timing for data transmission and reception). The manner where the CPU executes the handshaking operation differs in accordance with the types of peripheral devices at the reception source, as is shown in the example in Fig. 11.
(a) When the CPU performs asynchronous communication with a floppy disk drive (FDD), the CPU first instructs a floppy disk controller (FDC) to begin the rotation of a motor (motor ON). The motor is activated by setting a motor-ON bit at I/O port 3F2h of the FDC. Then, 500 msecs later, the CPU transmits a command to the FDC, and thereafter the FDC executes a DMA data transfer from the FDD. After the DMA transfer is completed, the FDC transmits an interrupt request (IRQ6) to the CPU. In response to this request, the CPU reads the status register (I/O port 3F4h) of the FDC to ascertain whether the DMA transfer has been completed without any errors. The above mentioned time out value, 500 msecs, is the time that is required for the rotation of the motor to be stabilized, and is determined based on the specifications for the FDD.
(b) When accessing a keyboard, the CPU first reads the status register (I/O port 64) of a keyboard/mouse controller (KMC), and as a flag, sets the least significant bit of the I/O port 64 to "1". The CPU continues polling the first lower bit for a predetermined time period (for example, 2 seconds) to determine whether or not the keyboard has read the flag and has reset it to "0". If the flag is not reset within the predetermined time period, the program of the CPU (BIOS) jumps to an error routine. The above mentioned time out value, 2 seconds, is determined based on the specifications for the keyboard.
(c) To perform asynchronous communication with a hard disk drive, the CPU first transmits a command (data request) to the HDD, and 200 msecs later the CPU begins the data transfer. The data transfer is performed by units of one sector (= 512 bytes) each. Each time the transfer for one sector has been completed, the HDD transmits an interrupt request (IRQ14). The CPU, responsive to the interrupt request, reads the status register (I/O port lF7h) of the HDD and ascertains whether the data transfer has been completed without any errors. The above mentioned time out value, 200 msecs, is the time that the HDD requires for data buffering, and is determined based on the specifications for the HDD.

As is shown in Fig. 11, most of the handshaking operations include a time counting (time out) routine. During the course of the time counting routine, the CPU inevitably waits until a predetermined time has elapsed. In the above described example, the time out value is 500 msecs for the FDD, 2 seconds for the keyboard, and 200 msecs for the HDD. A compatible computer of the IBM PC/AT series performs the time out routine by permitting the CPU (more specifically, a BIOS that controls the operation of the peripheral devices by employing hardware for asynchronous communication) to count DRAM refresh timer signals. The DRAM refresh timer signals, which are generated by a programmable interval timer (PIT), switches its low/high level every 15.2 µsec. Since the timer signals are outputted at the I/O port 061h, the BIOS accesses the I/O port 061h frequently during a handshaking operation.

As previously mentioned, to perform asynchronous communication, the processing speed is determined in accordance with the slower speed of a peripheral device, and the CPU must wait. From the view point of power management, the performance of the CPU should be reduced during asynchronous communication. The CPU, however, must perform the above described time out function because exact execution of the handshaking operation requires it. If this need is disregarded and a "slow clock" or a "stop clock" is performed, the CPU (more specifically, the BIOS) will obtain an erroneous count for the timer signals (e.g., the DRAM refresh timer signals at the I/O port 61) and will not acquire an exact time out value. As a result, security of the system can not be maintained. In short, the demands of power management and of system security conflict.

With security of the system being regarded as more important, almost all the current PCs operate their CPUs at full speed and in normal mode (i.e., with a high operation clock frequency) during asynchronous communication. The systems are so designed that, even when the CPU is being operated in a slow clock mode, the CPU is returned to the normal mode for asynchronous communication. Regardless of how much reduced is the activity of the CPU, power saving procedures involving the CPU can not be begun during asynchronous communication. As a result, even if a CPU chip incorporates an excellent power saving function (see Fig. 10, for example), the system can employ this function only when the CPU has entirely fallen into an standby state. The CPU entirely falls into the waiting state only on limited occasions, such as when (1) there is no key input for more than a predetermined time period; and when (2) a DMA transfer is performed (during a DMA transfer, the CPU relinquishes the right to control the buses). When the CPU enters the slow clock mode or the stop clock mode during only such short periods of time, the effect of power management is insufficient. It is desirable that the periods during which power saving involving the CPU is performed should be extended.

### Summary of the Invention

To overcome the above described problems, the present invention provides an information processing system comprising:
a CPU having at least two operation modes, a normal mode and a power saving mode;
at least one peripheral device;
a bus employed for communication between said CPU and said peripheral device;
bus cycle detection means for monitoring a bus cycle on said bus;
condition determination means for determining an operational mode of said CPU in a specific bus cycle that is detected by said bus cycle detection means; and
signal generation means for providing, to said CPU, a control signal for changing between operational modes in accordance with a determination result by said condition determination means.

Preferably, the bus cycle detection means detects a bus cycle during which an activity of the CPU can be reduced, the condition determination means determines that the operating mode of the CPU during such bus cycle should be a power saving mode, and, in accordance with a determination result, the signal generation means transmits a control signal to have the CPU enter the low power consumption status.

The bus cycle detection means needs only to detect a bus cycle for accessing I/O port 061h (or a bus cycle for counting the timing for the handshaking operation) as a bus cycle during which the CPU should enter the low power consumption status. In such bus cycle, there is relatively low activity at the CPU, and the operating rate of the CPU can be reduced to such a degree that there will be no mistakes in the counting of DRAM refresh timer signals at the I/O port 061h.

When the information processing system includes at least a hard disk drive as a peripheral device, the bus cycle detection means may detect a bus cycle in which the I/O port 1F0h (or a data port for a hard disk drive) is accessed as a bus cycle during which the CPU should enter the low power consumption status. This is because, in such bus cycle, the communication speed is restricted by a slow HDD, and the activity at the CPU is relatively low.

When the information processing system includes as peripheral devices at least a floppy disk controller and a floppy disk drive, the bus cycle detection means may detect a bus cycle in which the I/O port 3F4h is accessed (or a bus cycle in which the status register of the floppy disk controller is accessed) as a bus cycle during which the CPU should enter the low power consumption state. This is because, in such bus cycle, the CPU merely performs polling, and its operating rate can be reduced.

In accordance with the detection of a bus cycle in which the I/O port 061h is accessed, the condition determination means may shift the operating mode of the CPU to a power saving mode, and may inhibit the return to a normal mode until a bus cycle other than the previously detected bus cycle is detected twice in succession. While the timing for the handshaking operation is being measured, two events may occur: the one when only the I/O port 061h access is repeated, as occurs during data transfers with an FDD and an HDD (see Figs. 11(a) and 11(c)); and the other when the I/O port 061h access and the I/O port 064h access (status reading) are alternately repeated, as occurs when a keyboard is accessed (see Fig. 11(b)). Therefore, when the condition determination means shifts the condition of the CPU, as is described above, the power saving operation can be executed during the handshaking operation.

Or the condition determination means may shift the operating mode of the CPU to the power saving mode, in accordance with a detection result for a bus cycle in which the I/O port 1F0h (or the data port of the hard disk drive) is accessed, and may return the operating mode to a normal mode when another bus cycle is detected. One data transfer with the HDD is performed by accessing the I/O port 1F0h 256 times (previously mentioned). When the condition determination means changes the condition of the CPU as is described above, the power saving operation can be performed during the data transfer.

In addition, the condition determination means may shift the operating mode of the CPU to the power saving mode, in accordance with a detection result for a bus cycle in which the I/O port 3F4h (or the status register of the floppy disk controller) is accessed, and may return the operating mode to a normal mode when another bus cycle is detected. When the CPU is to transmit commands (including seek, read and write commands) to the FDC, polling of the status register is performed in advance to determine whether or not the FDD is ready. The polling is normally performed a plurality of times. If the condition determination means changes the condition of the CPU as is described above, the power saving operation can be executed during the polling.

The "power saving mode" in the individual aspects of the present invention is an operating mode in which, for example, the frequency of the operational clock for at least one unit part inside the CPU can be reduced or its operation can be entirely halted.

Preferably, while the measuring for the handshaking operation is performed, the operating clock frequency of the CPU can be reduced, or its operation can be halted, in accordance with an appropriate timing even during asynchronous communication with a peripheral device.

Preferably, the operating clock frequency of the CPU can be reduced, or its operation can be halted, in accordance with an appropriate timing, by more exactly ascertaining the period during which data is transferred between the CPU and the HDD.

Preferably, the operating clock frequency of the CPU can be reduced, or its operation can be halted, in accordance with an appropriate timing by more exactly determining the period during which polling is performed to obtain the status of the FDC.

That is, the information processing system according to the present invention provides, in units of one bus cycle, the low power consumption by the CPU.

Conventionally, shifting the CPU into the power saving mode while asynchronous communication is in progress will thrust the security of the system into danger. However, with the information processing system according to the invention, since the CPU can enter the power saving mode in accordance with an appropriate timing, the demands for the provision of the power management effect and for the maintenance of the security of the system can be satisfied.

As a secondary effect that is provided by the present invention, the design of software is easier. The asynchronous communication between the CPU and the peripheral device can occur at any time while the CPU is executing the BIOS or any other application programs. Taking all the conditions into account, it is almost impossible, because of time and economical factors, for the design of all the software that may be installed into the system to be so changed as to "reduce the performance of the CPU chip during the handshaking operation". In the present invention, specially designed hardware (a "PM-LSI chip 50", which will be described later) is employed to accomplish the power saving operation for the CPU chip. Thus, the operating rate of the CPU does not affect the software, and no software design changes are required.

Another preferred feature of the present invention is that the CPU also has a stop mode in which operation is completely halted; and the system further comprises a communication port, physically connectable to another independent apparatus, for performing data transfer; state determination means for determining an operational mode of the CPU in response to detection by the bus cycle of access to the communication port; said signal generation means providing, when the state determination means ascertains that the operational mode is to be the power saving mode, a control signal to the CPU to set the CPU to the power saving mode; and CPU operation halting means for completely halting an operation of the CPU when the state determination means ascertains that the operational mode is to be the stop mode.

Preferably, the bus cycle detection means, the state determination means, and signal generation means are provided by a one-chip LSI that is, for example, a power management LSI (PM_LSI) 50, which will be described later. A control signal generated by the signal generation means may be inputted to a control pin "STPCLK#" on the CPU chip. The CPU operation halting means may be a hardware component (e.g., a clock controller 60 which will be described later) that can halt the input of a clock to the CPU, for example. The power saving mode of the CPU may be a "slow clock" that is performed by intermittently driving the STPCLK#, and the stop mode may be a "stop clock" that is performed by completely halting the operating clock.

The communication port is, for example, a serial port or a parallel port.

The state determination means may determine that the operational mode should be the power saving mode when a first predetermined time has elapsed, in the normal mode, since a last bus cycle for accessing a port address assigned to a data port for the serial transfer or for the parallel transfer. For example, one or more of address 3F8h (COM1), address 2F8h (COM2), address 3E8h (COM3), and address 2E8h (COM4) are assigned for the serial transfer data port. One or more of address 3BCh (LPT1), address 378h (LPT2), and address 278h (LPT3) are assigned to the parallel transfer data port.

The state determination means may determine that the operational mode should be the stop mode when a second predetermined time has elapsed, in the power saving mode, since a last bus cycle for setting or cancelling a control value for the serial transfer or the parallel transfer. Control/status registers for the serial transfer are assigned to I/O port address 3F9h to address 3FFh (COM1), address 2F9h to address 2FFh (COM2), address 3E9h to address 3EFh (COM3), or address 2F9h to address 2EFh (COM4). Control/status registers for the parallel transfer are assigned to I/O port address 3BDh to address 3BFh (LPT1), address 379h to address 37Fh (LPT2), or address 279h to address 27Fh (LPT3). The bus cycle detection means need only detect the access cycles for these addresses.

The state determination means may determine that the operational mode should be the normal mode upon the occurrence of a bus cycle for accessing a port address assigned to a data port for the serial transfer or for the parallel transfer during the power saving mode. The port address is, for example, one of address 3F8h (COM1), address 2F8h (COM2), address 3E8h (COM3), and address 2E8h (COM4), or one of address 3BCh (LPT1), address 378h (LPT2), and address 278h (LPT3).

The state determination means may determine that the operational mode is to be the power saving mode upon the occurrence of a bus cycle for setting or cancelling a control value for the serial transfer or the parallel transfer during the stop clock mode. Control/status registers for the serial transfer are assigned to I/O port address 3F9h to address 3FFh (COM1), address 2F9h to address 2FFh (COM2), address 3E9h to address 3EFh (COM3), or address 2F9h to address 2EFh (COM4). Control/status registers for the parallel transfer are assigned to I/O port address 3BDh to address 3BFh (LPT1), address 379h to address 37Fh (LPT2), or address 279h to address 27Fh (LPT3). The bus cycle detection means need only detect the access cycles for these addresses.

Preferably, the information processing system also comprises power saving control means for activating either the signal generation means or the CPU operation halting means in accordance with both a monitoring result obtained by the CPU monitoring means and a determination result obtained by the state determination means.

In this form of the information processing system, the bus cycle detection means, the state determination means, and signal generation means are provided by a one-chip LSI that is, for example, the power management LSI (PM_LSI) 50, which will be described later. A control signal generated by the signal generation means may be inputted to a control pin "STPCLK#" on the CPU chip. The CPU operation halting means may be a hardware component (e.g., the clock controller 60, which will be described later) that can halt the input of a clock to the CPU, for example. The power saving mode of the CPU may be a "slow clock" that is performed by intermittently driving the STPCLK#, and the stop mode may be a "stop clock" that is performed by completely halting the operating clock.

The operation of the CPU monitoring means can be performed also by a software method whereby the APM driver refers to a queue of a scheduler, for example.

The operation of the power saving control means can also be performed by a software method whereby, when the APM driver detects that there is no effective task in a queue of the scheduler, i.e., that the queue is empty, the determination result obtained by the state determination means is referred to and either the signal generation means or the CPU operation halting means is activated, as needed (more specifically, the APM BIOS is called).

The state determination means may determine that the power saving mode is inhibited and should be returned to the normal mode upon the occurrence of a bus cycle for accessing a port address assigned to a data port for the serial transfer or for the parallel transfer in the power saving mode.

During a period that the state determination means permits the CPU to enter the power saving mode, when the CPU monitoring means has detected the idle state of the CPU, the power saving control means may activate the signal generation means.

During a period that the state determination means permits the CPU to enter the stop mode, when the CPU monitoring means has detected the idle state of the CPU, the power saving control means may activate the CPU operation halting means.

During a period wherein the state determination means inhibits the CPU from entering the power saving mode, the power saving control means may not activate the signal generation means regardless of the detection by the CPU monitoring means that the CPU is idle.

During a period wherein the state determination means inhibits the CPU from entering the stop mode, the power saving control means may not activate the CPU operation halting means regardless of the detection by the CPU monitoring means that the CPU is idle.

The exchange of data transfer by the system with another apparatus via a communication port (e.g., a serial port or a parallel port) is generally constituted by three phases: 1) an "initial setup phase" in which a control value for data transfer (e.g., a baud rate, an IRQ level, and an FIFO) is set in advance or the status of the communication port is confirmed; 2) a "data transfer phase" in which data exchange is performed; and 3) an "end process phase" in which a control value (e.g., the IRQ level) is cancelled after data transfer is completed or the status of the communication port is confirmed. In the data transfer phase, the CPU must be fully active in order to process without delay data input or output at relatively high speed. In the initial setup phase and the end process phase, which are before or after data transfer is performed, the activity of the CPU may is low (especially, in the initial setup phase, a wait time until data transfer begins is included), so that the performance of the CPU can be lowered to a degree.

According to an above mentioned aspect of the present invention, the CPU in the normal mode can enter the power saving mode in response to the event that a first predetermined time has elapsed since a last access to the data port for data transfer. According to a further above mentioned aspect of the present invention, the CPU in the normal mode is permitted to enter power saving mode in response to a event that a first predetermined time has elapsed since a last access to the data port for data transfer. If the idle state of the CPU (i.e., the queue is empty) is detected during the predetermined period, the power saving control means activates the signal generation means and the CPU immediately enters the power saving mode. When a first predetermined time has elapsed since a last access to the data port for the data transfer, this means that data exchange is not currently being performed with another independent apparatus, and thus the CPU does not have to be fully active. Accordingly the performance of the CPU can be reduced, as needed, so as to enhance the power management effect. In an IBM PC/AT compatible apparatus ("PC/AT" is a trademark of IBM Corp.), since I/O port address 3F8h (or one of address 2F8h, address 3E8h, and address 2E8h) is assigned to a data port for the serial transfer, and one of I/O port address 3BCh, address 378h, and address 278h is assigned for a data port for the parallel transfer, the bus cycle detection means need only detect access cycles for the pertinent addresses.

Further, according to an above mentioned aspect of the present invention, the CPU in the power saving mode is to enter the stop mode when a second predetermined time has elapsed since a last bus cycle for setting or cancelling a control value for data transfer. According to the further above mentioned aspect of the present invention, the CPU in the power saving mode is permitted to enter the stop mode when a second predetermined time has elapsed since a last bus cycle for setting or cancelling a control value for data transfer. If the idle state of the CPU (i.e., the queue is empty) is detected during the predetermined period, the power saving control means activates the CPU operation halting means and the CPU immediately enters the stop mode. When a second predetermined time has elapsed since a last bus cycle for setting or cancelling a control value for data transfer, this means that even a preprocess is not yet being performed for the transfer of data to another independent apparatus, or that a post process for data transfer has been completed. Thus, in this period, there is no probability that data transfer will be suddenly begun and thus the CPU must be activated rapidly. Accordingly the operating clock of the CPU is halted, as needed, and the power management effect can be increased. In an IBM PC/AT compatible apparatus, I/O port address 3F9h and address 3FFh, address 2F9h and 2FFh, address 3E9h and address 3EFh, or address 2F9h and address 2EFh are assigned as field for storing a control value and a status for serial transfer. One of I/O port address 3BDh to address 3BFh address 379h to address 37Fh, and address 279h to address 27Fh address is assigned as an field for storing a control value or the status for parallel transfer. The bus cycle detection means therefore need only detect access cycles to the pertinent addresses.

Also the CPU in the power saving mode is recovered to the normal mode in response to the occurrence of the access to the data port for data transfer. Further the CPU is inhibited from being in the power saving mode upon the occurrence of the access to the data port for data transfer. Accordingly, the power saving control means deactivates the signal generation means, and the CPU immediately is recovered to the normal mode. When the access to the data port for data transfer has occurred, this means that data transfer to another independent apparatus should be begun and the CPU must be fully active. According to the first and the second aspects of the present invention, at the same time data transfer is begun, the CPU is recovered to the normal mode and begins full operation. In an IBM PC/AT compatible apparatus, I/O port address 3F8h (or one of address 2F8h, address 3E8h, and address 2E8h) is assigned as a data port for serial transfer. I/O port address 3BCh (or either address 378h or address 278h) is assigned as a data port for parallel transfer. The bus cycle detection means need therefore only detect access cycles for the pertinent addresses.

Additionally, the CPU in the stop mode is to be recovered to the power saving mode upon the occurrence of the bus cycle for setting or cancelling a control value for data transfer. Further the CPU is inhibited from being in the stop mode upon the occurrence of the bus cycle for setting or cancelling a control value for data transfer. Accordingly, the power saving control means deactivates the CPU operation halting means, and the CPU is immediately recovered to the power saving mode. When a bus cycle for setting or cancelling a control value for data transfer has occurred, this means that the phase enters the initial setup phase, and data transfer will be started. Although the CPU must be fully active in the normal mode at the time of data transfer, a delay time is required before the system can be recovered from the stop mode to the normal mode, and data received until the operation is stabilized would be lost. Accordingly when the start of data transfer is expected while the CPU is in the stop mode, the CPU is recovered to the power saving mode in advance so that it can rapidly recover to the normal mode. In an IBM PC/AT compatible apparatus, I/O port address 3F9h and address 3FFh, address 2F9h and address 2FFh, address 3E9h and address 3EFh, or address 2F9h and address 2EFh, are assigned as areas for storing a control value and a status for serial transfer. I/O port address 3BDh and address 3BFh, address 379h and address 37Fh, or address 279h and address 27Fh are assigned as areas for storing a control value and the status for parallel transfer. The bus cycle detection means need therefore only detect access cycles for the pertinent addresses.

The present invention is based on the fact that (1) the phase always enters the initial setup phase before it goes to the substantial data transfer phase in which full operation is required; and (2) the performance of the CPU can be reduced in the initial setup phase and the end process phase. In other words, when the phase is in the initial setup phase or in the end process phase, a reduction of the performance of the CPU is allowed to a degree. Further, in a period wherein the phase is expected to go to the substantial data transfer phase, such as a period that the access to the control register for data transfer is performed, a CPU in the stop mode is returned to the power saving mode and placed in the condition that it is ready for rapid recovery to the normal mode. In other words, the present invention seeks to reduce the power consumption by the bus cycle.

It is therefore possible to provide an improved information processing system that can lower the performance of the CPU at an adequate timing so as to increase the power management effect, even when data transfer to another independent apparatus (e.g., another PC) is being performed (or a communication application is being executed).

### Brief Description of the Drawings

The present invention will now be described, by way of example only, with reference to preferred embodiments thereof as illustrated in the accompanying drawings, in which :
Fig. 1 is a diagram illustrating the hardware arrangement of a personal computer (PC) 100 that is employed for carrying out the present invention.
Fig. 2 is a schematic diagram illustrating the software arrangement that can be executed by the PC 100, which is employed for the present invention.
Fig. 3 is a diagram showing the internal arrangement of the power management LSI according to one embodiment of the present invention.
Fig. 4 is a timing chart for a cycle, for accessing a port 061h, which occurs on a PCI bus 16.
Fig. 5 is a timing chart for a cycle, for accessing a port 1F0h, which occurs on the PCI bus 16.
Fig. 6 is a timing chart for a cycle, for accessing a port 3F4h, which occurs on the PCI bus 16.
Fig. 7 is a diagram showing the shifting of operating conditions, which represents the operational characteristic of a condition determine 50a, with Fig. 7(a) showing the processing for accessing port 061h, with Fig. 7(b) showing the processing for accessing port 1F0h, and with Fig. 7(c) showing the processing for accessing port 3F4h.
Fig. 8 is a specific diagram showing phases in asynchronous communication between the CPU 11 and an HDD 21.
Fig. 9 is a diagram showing a handshaking operation when the CPU 11 transmits a command (seek/read/write) to an FDC 26.
Fig. 10 is a schematic diagram illustrating the arrangement of the CPU that incorporates the power management function.
Fig. 11 is a diagram for describing the performance of the handshaking operation, with Fig. 11(a) specifically showing the handshaking with the FDC, with Fig. 11(b) showing the handshaking with a KMC, and with Fig. 11(c) showing the handshaking with the HDD.
Fig. 12 is a timing chart for a read cycle that occurs on a PCI bus.
Fig. 13 is a timing chart for a write cycle that occurs on a PCI bus.
Fig. 14 is a state machine diagram showing the operational characteristics of a state determiner 50b.
Fig. 15 is a graph showing the system 100 when it performs data transfer with another apparatus via a communication port, with Fig. 15(a) specifically showing individual phases while a communication application is being executed, Fig. 15(b) showing the determination results (conditions) of the state determiner 50b in the individual phases, Fig. 15(c) showing an example activity (the presence of an effective task in a queue) of the CPU, and Fig. 15(d) showing the performance (operational mode) of the CPU that is actually performed during the activities of the CPU.

### Detailed Description of the Invention

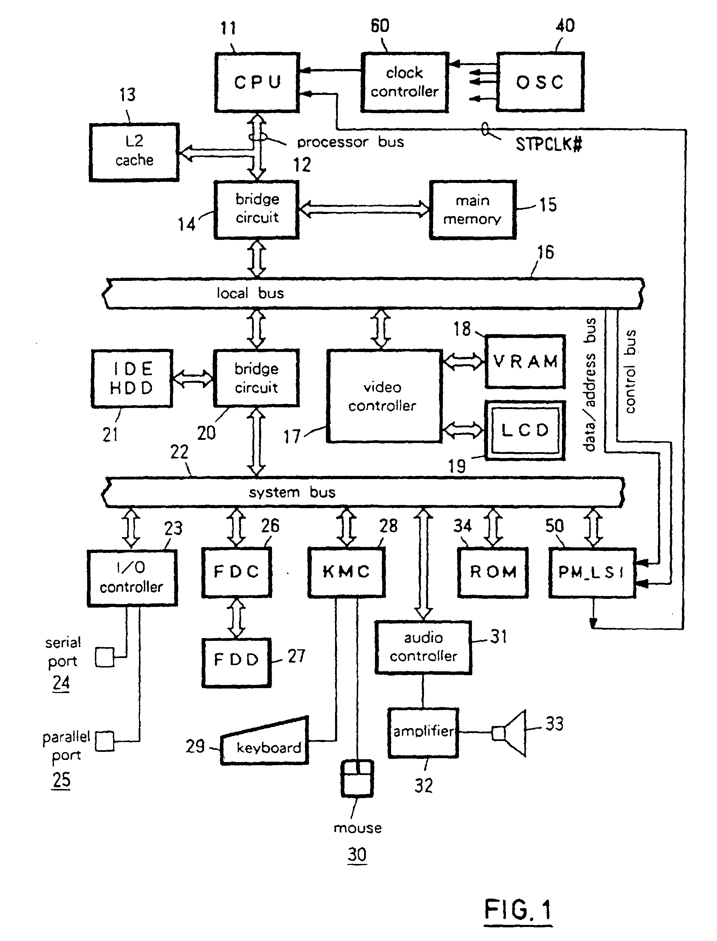

Fig. 1 is a diagram showing the hardware arrangement of a personal computer (PC) 100 that is employed for carrying out the present invention. The individual sections will now be explained.

A CPU 11, a main controller, employs an operating system (OS) to execute various programs. A processor bus 12 that runs from the CPU 11 communicates with the individual peripheral devices (which will be described later) across two bus layers, which are a local bus 16 and a system bus 22. The CPU 11 has substantially the same structure as that shown in Fig. 10. A "Pentium/1xx MHz", which is sold by Intel Corp. may be employed as the CPU 11, for example. The buses 12, 16, and 22 are common signal path lines that each includes data bus signals, address bus signals, and control bus signals. The local bus 16 is a relatively high speed bus that connects specific peripheral devices, such as graphic devices. A PCI (Peripheral Component Interconnect), which is prescribed by Intel Corp., is one example of such a local bus 16. The system bus 22 is a bus that connects relatively slow peripheral devices, such as an FDD, with an ISA (Industry Standard Architecture) bus being one example.

The processor bus 12 and the local bus 16 communicate with each other across a bridge circuit (host-PCI bridge) 14. The bridge circuit 14 in this embodiment includes a memory controller, for controlling the access of a main memory 15, and a data buffer, for absorbing the speed difference between the buses 12 and 16. The main memory 15 is a volatile memory (RAM) in which various programs (the OS and application programs) that the CPU 11 executes are loaded or which the CPU 11 employs as a work area. Dynamic RAM (DRAM), with which for a large memory capacity is relatively inexpensive and available, is employed for the main memory 15, and a capacity of, for example, about 8 MB is considered standard. An external cache (also called a "Level 2 (L2) - cache") is provided to absorb the difference between the processing speed of the CPU 11 and the access speed for the main memory 15. The L2-cache 13 is constituted by static RAM (SRAM), which is faster than a DRAM, and has a memory capacity of approximately 256 KB, for example.

Peripheral devices, such as a video controller 17, for which relatively high speed is required, are connected to the local bus 16. The video controller 17 is a peripheral controller for actually processing a drawing command that is sent from the CPU 11. The processed drawing information is temporarily written to a screen buffer (VRAM) 18, and the written information is read from the VRAM 18 and is outputted to a liquid crystal display (LCD) 19, which serves as display means.

The local bus 16 and the system bus 22 communicate with each other across a bridge circuit (PCI-ISA bridge) 20. The bridge circuit 20 in this embodiment includes a DMA (Direct Memory Access) controller, an interrupt controller, and a programmable interval timer (PIT). The DMA controller is a peripheral controller that transfers data between the main memory 15 and peripheral devices (such as an FDD 27 that will be described later), without the involvement of the CPU 11. The interrupt controller handles hardware interrupt requests (IRQ) from the individual peripheral devices and transmits them to the CPU 11. The PIT supplies several types of timer signals to the individual sections of the system 100. A timer signal that is generated by the PIT is, for example, a periodical interrupt (INTR) that is provided to an OS/BIOS at an interval of 55 msecs, a previously mentioned DRAM refresh timer signal, or a tone generation signal for the production of audio sounds.

The bridge circuit 20 further includes an interface (for example, an IDE interface: originally, IDE (Integrated Drive Electronics) was the standard interface for directly connecting a hard disk drive (HDD) to an ISA bus), which connects an HDD 21 that serves as an auxiliary storage device.

The two bridge circuits 14 and 20 are generally provided by a single chip set. A chip set example is "Trition", which is sold by Intel Corp.

To the system bus 22 are connected relatively low speed peripheral devices, such as an I/O controller 23, a floppy disk controller (FDC) 26, a keyboard/mouse controller (KMC) 28, an audio controller 31, a ROM 34, and a power management LSI 50.

The I/O controller 23 is a peripheral controller for controlling the exchange of data with external devices via a serial port 24 or a parallel port 25. An example of an external device is a modem or a printer (neither of them shown).

The FDC 26 is a dedicated controller for driving a floppy disk drive (FDD) 27.

The KMC 28 is a controller for processing an input matrix at a keyboard 29 and a coordinate set that is pointed at by a mouse 30. The KMC 28 converts an input signal into a format that conforms to the definition of the OS and outputs the result to the bus 22.

The audio controller 31 is a peripheral controller for handling input and output of audio signals. One of the functions of the audio controller 31 is the generation of a tone signal based on a specific frequency signal generated by the PIT. The output signal from the audio controller 31 is, for example, amplified by an amplifier 32, and the amplified signal is output through a loudspeaker 33.

The ROM 34 is a nonvolatile memory for which written data are determined at the time of manufacture, and is employed for the permanent storage of predetermined codes. The codes that are stored in the ROM include a test program that is conducted when the system 100 is powered on (POST), and a program for controlling data input and output by the individual hardware components in the system 100 (BIOS).

An oscillator (OSC) 40 supplies an operational clock to a synchronously driven chip, such as the CPU 11. A clock signal is provided to the CPU 11 via a clock controller 60.

A power management LSI (PM-LSI) 50 is provided to accomplish an appropriate power management operation for the CPU 11. More specifically, the operation of the local bus 16 is snooped (also called a "bus snoop"), and the STPCLK# is outputted to the CPU 11 at a predetermined timing. The PM-LSI chip 50 is manufactured with a semi-custom design like a gate array. The LSI chip 50 play the main role in implementing the present invention, and its detailed structure and operational characteristic will be described later in subject divisions C and D.

The clock controller 60 halts, as needed, an input clock that is supplied from the OSC 40 to the CPU 11. As is mentioned above, upon the receipt of a control signal STPCLK#, the CPU 11 can lower or completely halt the operation in the partial functional unit of the CPU chip 11. The clock controller 60 halts the input of clock signals to an PLL circuit 11a to completely halt the operation of the CPU 11.

Almost all the PCs that are currently on sale in the market have hardware components that are equivalent to the block components that are denoted by reference numbers 11 through 40. Although many electric circuits other than those shown in Fig. 1 are required to constitute a PC, as they are well known to a person having ordinary skill in the part, and do not relate to the subject of the present invention, no explanation for these components is given in this specification.

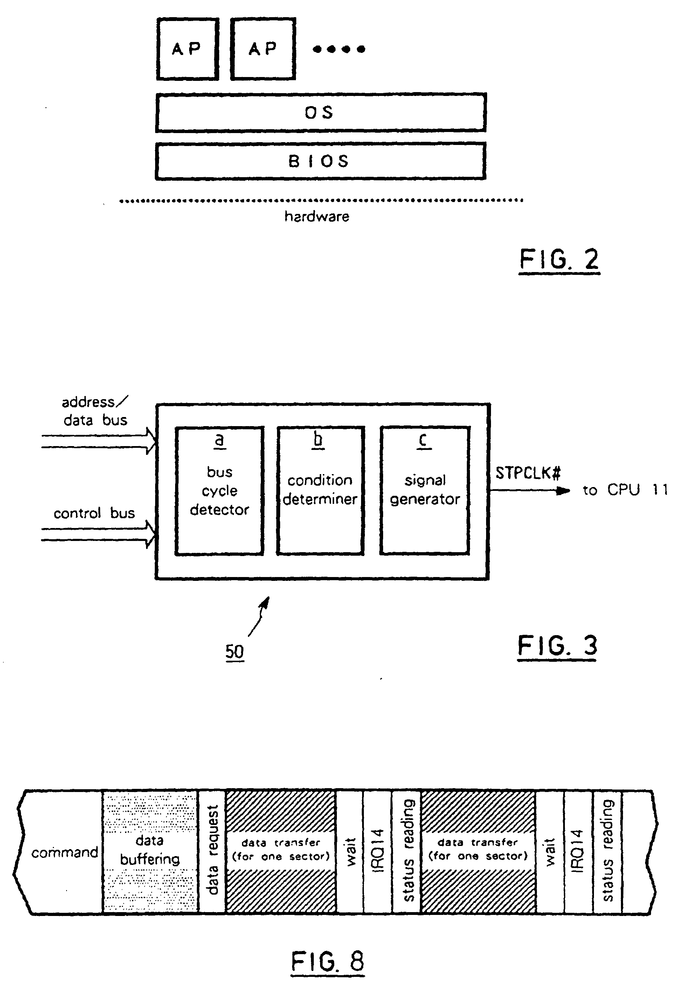

Fig. 2 is a schematic diagram illustrating the software arrangement that can be executed by the PC 100, which is employed for carrying out the present invention.

The software at the lowest layer is a BIOS (Basic Input/Output System). The BIOS is a program assembly that consists of the basic operation commands for controlling the individual hardware components (the video controller 17, the keyboard 29, the HDD 21, and the FDD 27) in the system 100. Upon receipt of a call from a higher layer program (an operating system or application programs, which will be described later), the BIOS performs the actual hardware control. The BIOS includes a boot strap routine that is performed when the system 100 is powered on, and routines for handling interrupt requests generated on the bus 16 or 22. The APM BIOS (previously described), with which the CPU chip 11 is actually operated by using hardware in the power management function, is also present in this level.

The operating system (OS) is the basic software for totally managing hardware and software within the system 100. OS/2 ("OS/2" is a trademark of IBM Corp.) or Windows ("Windows" is a trademark of Microsoft Corp.), for example, corresponds to the operating system. The OS also includes a "file manager" that handles the recording of files on the HDD 21, a "scheduler" that determines the order of execution of a task for the CPU and the priority order, and a "memory manager" that is responsible for the allocation of memory. Further, a "user interface" (a system command and a system call) that manages the display of windows and the manipulation of a mouse is also included.

In addition, it should be understood that a "device driver" added later as hardware operating software is also one part of the OS. An example device driver is a display driver for driving a display device, such as the LCD 19. The above described APM driver that calls the APM BIOS is also present at this level.

The uppermost layer is application programs (AP). Programs for word processing, databases, calculations for charts, communication, etc., correspond to the APs. The APs are loaded, as needed, from the HDD 21 and the FDD 27 to the main memory 15 in accordance with the intent of a user.

When the power management operation is to be executed, the APM (previously mentioned) compatible APs can perform a routine for a request/affirmative response with the APM driver by registering themselves in the APM driver.

The software hierarchical structure shown in Fig. 2 is well known to one having ordinary skill in the art. It will become apparent from the following explanation that any changes in software design at the individual layers is not required.

Fig. 3 is a diagram showing the internal arrangement of the power management LSI (PM-LSI) 50. The LSI chip 50 is mounted in the PC 100 to appropriately accomplish the power management operation of the CPU according to the embodiment.

As is shown in Fig. 3, the PM-LSI 50 includes a bus cycle detector 50a, a condition determiner 50b, and a signal generator 50c. The PM-LSI 50 monitors address bus signals, data bus signals, and control bus signals that constitute the local bus 16, and outputs the control signal STPCLK# to the CPU 11. STPCLK# is also one of the control signals on the processor bus 12.

### Bus cycle detector 50a:

The bus cycle detector 50a monitors the bus cycle on the local bus 16 (also called a "bus snoop"). When the detector 50a detects that a specific port address has been accessed, it notifies the condition determiner 50b. When a PCI bus is employed for the local bus 16, the signal lines that the bus cycle detector 50a should snoop are all of the 32-bit address/data buses, C/BE (Command/Bus Enable) #, FRAME#, IRDY (initiator Ready) #, and TRDY (Target Ready) #, among the local bus 16. According to the standards for the PCI bus, the address bus and the data bus are multiplexed.

(1) At the time the handshaking timing is adjusted: An example bus cycle that the bus cycle detector 50a should detect is an access cycle for port 061h. To the port 061h are assigned DRAM refresh timer signals generated by the programmable interval timer (PIT), and for which the low/high levels are switched every 15.2 µsec. The CPU 11 (more specifically, the BIOS that controls the hardware components for asynchronous communication) counts the timer signals to acquire a timing for handshaking. The access cycle for the port 061h is frequently generated while the BIOS is counting up the DRAM refresh signals, such as until 500 msecs elapses after a command (motor ON of the FDD 27) was sent to the FDC 26, 2 sec after the status reading was performed for the KMC 28 (the port 064h was accessed), or 200 msecs after a command (n sector read/write) was sent to the HDD 21.

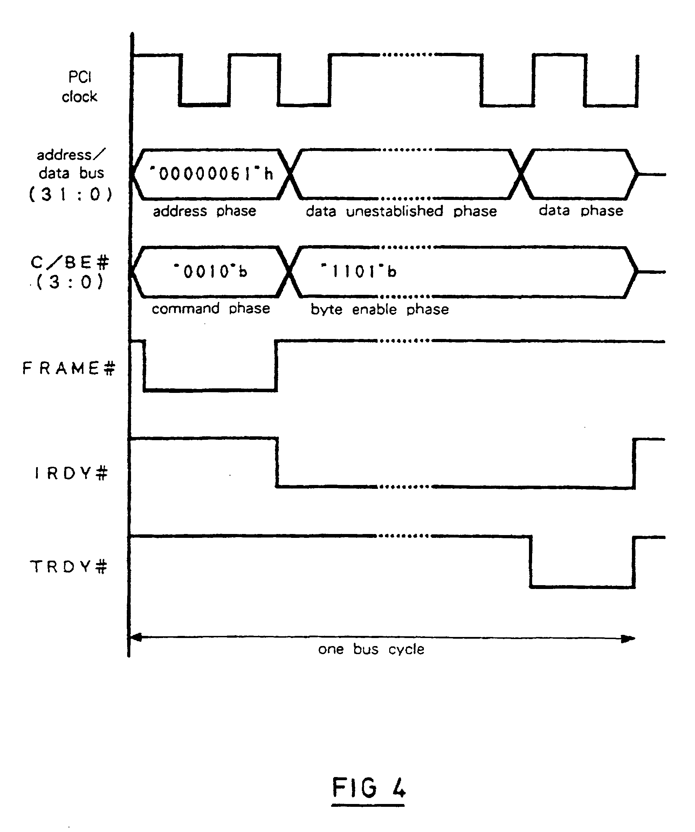

Fig. 4 is a timing chart for an access cycle, for the port 061h, that occurs on the PCI bus 16. In the bus cycle, the bridge circuit 14 takes the place of the CPU 11 (BIOS) and serves as an "initiator" that issues a command. A "target" that receives a command is the bridge circuit 20 that has the port 061h.

As is shown in Fig. 4, in the first PCI clock cycle, the address/data bus is in an address phase, and the C/BE# (3:0) is in a command phase. The bridge circuit 14 that acts as an initiator outputs, to the address/data bus, a port address "00000061"h to be accessed, and outputs, to the C/BE# (3:0), the value "0010"b, as the I/O read command. The FRAME# is rendered active (i.e., is pulled low) to indicate the start of the bus cycle.

In the next PCI clock cycle, the address/data bus enters the data unestablished phase. The C/BE# (3:0) enters the byte enabled phase, and the value "1101"b, which indicates the byte position for reading, is transferred.

When the initiator becomes ready, the initiator renders the FRAME# inactive (i.e., pulls it high) and renders the IRDY# active (i.e., pulls it low).

When the target becomes ready, the target renders the TRDY# active (i.e., pulls it low). At this time, the address/data bus has entered the data phase, and in response to the active state at the TRDY#, the transfer of established data is begun.

Then, the IRDY# and the TRDY# are rendered inactive (i.e., pulled high), and the bus cycle is terminated.

(2) At the time data is transferred between the CPU and the HDD: Another example bus cycle that should be detected by the bus cycle detector 50a is an access cycle for the port 1F0h. The port 1F0h has a length of 2 bytes (= one word length), and is assigned to a data port for the IDE HDD 21. The data transfer (both reading and writing) for the HDD 21 is performed in units of one sector (= 512 bytes). During one data transfer, 256 bus cycles occur sequentially during which the CPU (more specifically, the BIOS that performs the data transfer) accesses the port 1F0h.

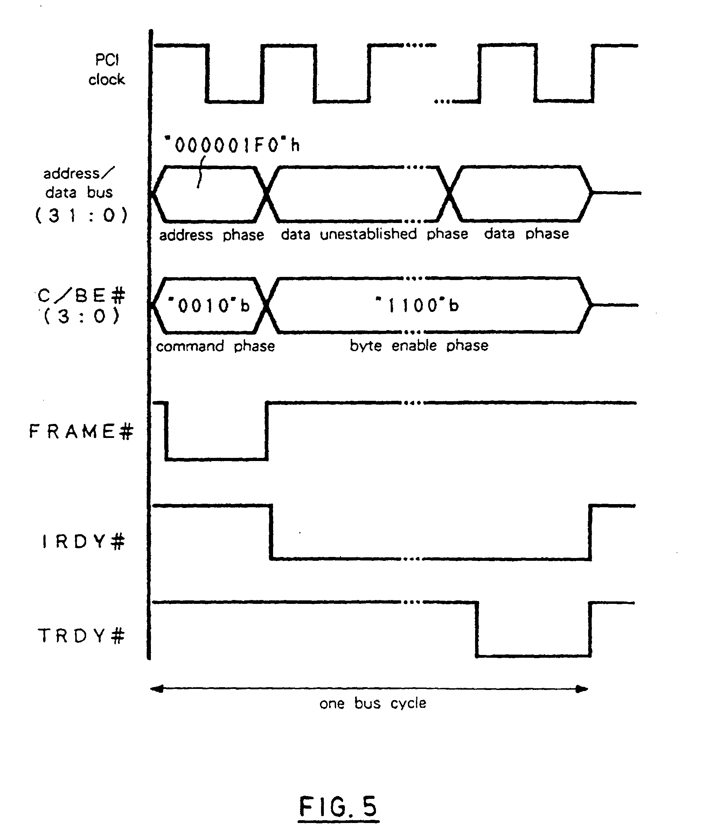

Fig. 5 is a timing chart showing an access cycle (reading cycle) for the port 1F0h that occurs on the PCI bus 16. In this bus cycle, the bridge circuit 14 takes the place of the CPU 11 (BIOS) and serves as an "initiator" which issues a command. A "target" that receives a command is the IDE HDD 21.

As is shown in Fig. 5, in the first PCI clock cycle, the address/data bus is in an address phase, and the C/BE# (3:0) is in a command phase. The bridge circuit 14 that is acting as an initiator outputs, to the address/data bus, port address "000001F0"h to be accessed, and outputs, to the C/BE# (3:0), the value "0010"b, as the I/O read command. The FRAME# is rendered active (i.e., is pulled low) to indicate the start of the bus cycle.

In the next PCI clock cycle, the address/data bus enters the data unestablished phase. The C/BE# (3:0) enters the byte enable phase, and the value "1100"b, which indicates the byte position for reading, is transferred.

When the initiator becomes ready, the initiator renders the FRAME# inactive (i.e., pulls it high) and renders the IRDY# active (i.e., pulls it low).

When the target becomes ready, the target renders the TRDY# active (i.e., pulls it low). At this time, the address/data bus has entered the data phase, and in response to the active state of the TRDY#, the transfer of established data is begun.

Then, the IRDY# and the TRDY# are rendered inactive (i.e., pulled high), and the bus cycle is terminated.

(3) When polling is performed for the status register of the FDC: An additional example of the bus cycle that should be detected by the bus cycle detector 50a is an access cycle for port 3F4h. The port 3F4h is assigned to the status register of the FDC 26. When the CPU 11 transmits a command (e.g., a seek, read, or write command) to the FDC 26, the status should be checked in advance. Before a command is sent to the FDC 26, therefore, the status reading of the FDC 26, i.e., the access of the port 3F4h by the CPU (more specifically, the BIOS that performs polling on the status), is repeated.

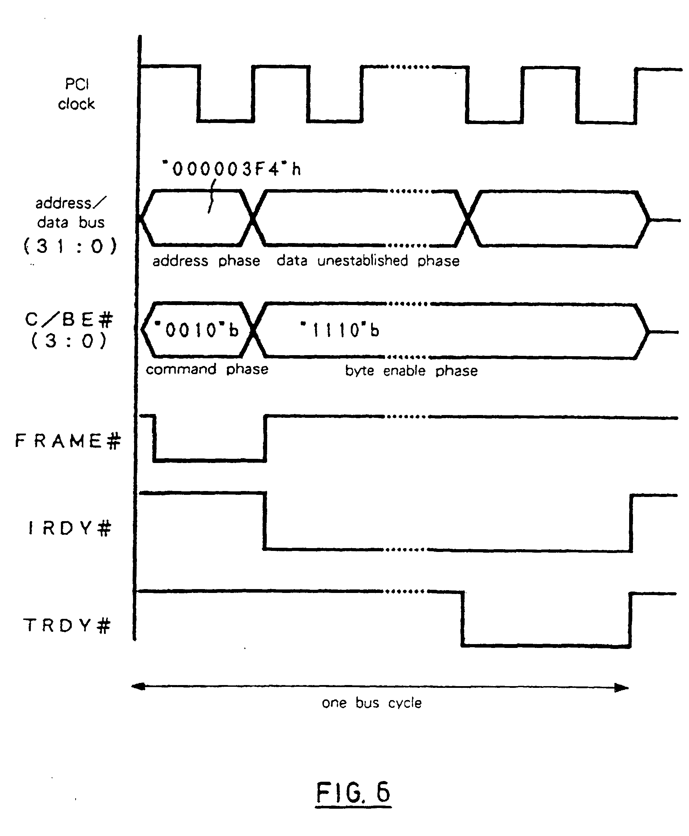

Fig. 6 is a timing chart showing an access cycle (reading cycle) for the port 3F4h that occurs on the PCI bus 16. In this bus cycle, the bridge circuit 14 takes the place of the CPU 11 (BIOS) and serves as an "initiator" which issues a command. A "target" that receives a command is the FDC 26.

As is shown in Fig. 6, in the first PCI clock cycle, the address/data bus is in an address phase, and the C/BE# (3:0) is in a command phase. The bridge circuit 14 that is acting as an initiator outputs, to the address/data bus, port address "000003F4"h to be accessed, and outputs, to the C/BE# (3:0), the value "0010"b, as the I/O read command. The FRAME# is rendered active (i.e., pulled low) to indicate the start of the bus cycle.

In the next PCI clock cycle, the address/data bus enters the data unestablished phase. The C/BE# (3:0) enters the byte enable phase, and the value "1110"b, which indicates the byte position for reading, is transferred.

When the initiator becomes ready, the initiator renders the FRAME# inactive (i.e., pulls it high) and renders the IRDY# active (i.e., pulls it low).

When the target becomes ready, the target renders the TRDY# active (i.e., pulls it low). At this time, the address/data bus has entered the data phase, and in response to the active state of the TRDY#, the transfer of established data is begun.

Then, the IRDY# and the TRDY# are rendered inactive (i.e., pulled high), and the bus cycle is terminated.

It would be understood by one having an ordinary skill in the art that only the 32-bit address/data bus, C/BE#, FRAME#, IRDY#, and TRDY#, among the local bus 16 need only to be snooped so that the bus cycle detector 50a detects the bus cycles shown in Figs. 4, 5 and 6. The bus cycle detector 50a may snoop not only the local bus 16 but also the system bus 22.

The reason that the bus cycle detector 50a detects accesses of port addresses, 061h, 1F0h and 3F4h, and the obtained effect will become apparent during the course of the following explanation.

### Condition determine 50b:

As is previously described, the bus cycle detector 50b in this embodiment detects three kinds of bus cycles: (1) an access cycle for port 061h; (2) an access cycle for port 1F0h; and (3) an access cycle for port 3F4h. The bus cycle detector 50b transmits notification of the detected bus cycle to the condition determine 50b. In response to this notice, the condition determine 50b determines whether the CPU 11 should currently be in a normal mode in which the CPU 11 is operated at high speed or in a power saving mode in which the STPCLK# is employed to reduce the performance of the functional unit 11a partially. The condition determine 50b in this embodiment determines different states in accordance with a received bus cycle access notification.

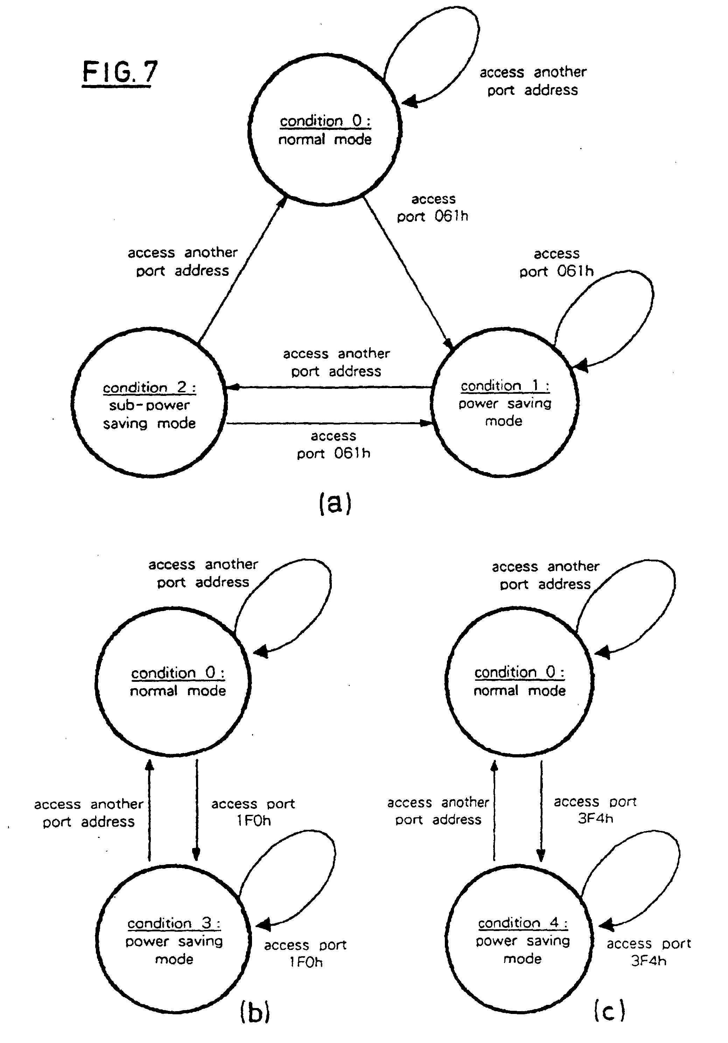

(1) At the time of adjustment of the handshaking timing: The access of I/O port 061h occurs when the CPU 11 (BIOS) is adjusting the handshaking timing (previously described). In such bus cycle, the activity at the CPU 11 is relatively low, so that the performance of the CPU 11 can be reduced to the degree that it doesn't mistakenly count up the timer signals at I/O port 061h that are switched every 15.2 µsec. Fig. 7(a) is state transition diagram showing the operation characteristic of the condition determine 50b when this bus cycle is detected. An explanation will be given while referring to Fig. 7(a).

### Condition 0:

When the CPU 11 is driven in a normal mode, i.e., while it is driven at the highest operational clock, the CPU 11 is set in condition 0. Even if a bus cycle for accessing an address other than I/O port 061h occurs during this period, the operational state is returned to condition 0. When a bus cycle for accessing I/O port 061h occurs during this period, it is assumed that a timing measurement is started by the BIOS, and the operational state is shifted to condition 1 in order to switch the CPU 11 into a power saving mode.

### Condition 1:

In condition 1, the CPU 11 is driven in the power saving mode. When a bus cycle for accessing I/O port 061h occurs again during this period, it means that the timing measurement is still being performed by the BIOS, and the operational state is returned to condition 1. When a bus cycle for accessing an address other than I/O port 061h occurs during this period, it is assumed that the timing measurement by the BIOS has been completed (i.e., the time out), or that, as when the keyboard 29 is accessed, the timing measurement and the status reading (accessing of I/O port 064h) are alternately repeated by the BIOS. In the latter case, the count up operation by the BIOS has not yet completed (see Fig. 11(b), for example). When the other bus access is detected in condition 1, the operational state is not shifted directly to condition 0 (i.e., the normal mode) but to condition 2 (a sub-power saving mode).

### Condition 2:

In condition 2, i.e., in the sub-power saving mode, the CPU 11 performs the same power saving operation as in the condition 1. However, the condition determine 50b can not determine either that the BIOS has completed the count up operation and the operational mode should be returned to the normal mode, or that the timing measurement by the BIOS is still continuing. When a bus cycle for accessing I/O port 061h is detected again in condition 2, the operational state is shifted to condition 1. When the other bus cycle is detected, it is apparent that the count up operation by the BIOS has completed, and the operational state is moved to condition 0.

(2) At the time of a data transfer between the CPU and the HDD: The access cycle for port 1F0h occurs when the data transfer (including reading and writing) is to be performed between the CPU 11 and the HDD 21 (previously described). One data transfer (i.e., the data transfer of one sector) is performed by sequentially accessing I/O port 1F0h 256 times. The data transfer speed is determined in accordance with the speed of the slower HDD 21. Thus, during this access cycle, the activity of the CPU 11 is relatively low, so that the performance of the CPU 11 can be reduced. Fig. 7(b) is a state transition diagram showing the operation characteristic of the condition determine 50b when this bus cycle is detected. An explanation will be given while referring to Fig. 7(b).

### Condition 0:

When the CPU 11 is driven in a normal mode, i.e., while it is driven at the highest operational clock, the CPU 11 is set in condition 0. Even if a bus cycle for accessing an address other than I/O port 1F0h occurs during this period, the operational state is returned to condition 0. When a bus cycle for accessing I/O port 1F0h occurs during this period, it is assumed that the data transfer has begun, and the operational state is shifted to condition 3 in order to place the CPU 11 in the power saving mode.

### Condition 3:

In condition 3, the CPU 11 is driven in the power saving mode. When a bus cycle for accessing I/O port 1F0h occurs again during this period, it means that the CPU 11 is continuing the data transfer with the HDD 21, and the operational state is returned to condition 3. When a bus cycle for accessing an address other than I/O port 1F0h is detected during this period, the operation mode is changed to condition 0, i.e., to the normal mode. It is because the occurrence of the different bus cycle means that the data transfer is terminated.

(3) When polling is performed for the status register of the FDC: The access cycle for I/O port 3F4h repeatedly occurs before the CPU 11 transmits a command to the FDC 26 (previously described). During the polling of the status register, the activity of the CPU 11 is relatively low, so that the performance of the CPU 11 can be reduced. Fig. 7(c) is a state transition diagram showing the operation characteristic of the condition determine 50b when this bus cycle is detected. An explanation will be given while referring to Fig. 7(c).

### Condition 0:

When the CPU 11 is driven in the normal mode, i.e., while it is driven at the highest operational clock, the CPU 11 is set in condition 0. Even if a bus cycle for accessing an address other than I/O port 3F4h occurs during this period, the operational state is returned to condition 0. When a bus cycle for accessing I/O port 3F4h occurs during this period, it is assumed that polling of the status has begun, and the operational state is shifted to condition 4 in order to place the CPU 11 in the power saving mode.

### Condition 4:

In condition 4, the CPU 11 is driven in the power saving mode. When a bus cycle for accessing I/O port 3F4h occurs again during this period, it means that the polling of the status is continuing, and the operational state is returned to condition 4. When a bus cycle for accessing an address other than I/O port 3F4h is detected during this period, the operation mode is changed to condition 0, i.e., to the normal mode. It is because the occurrence of the different bus cycle means that the polling is terminated.

### Signal generator 50c:

Upon the detection of the bus cycle, the condition determine 50b can determine the time when the CPU can be shifted to the power saving mode (previously described). In accordance with this determination result, the signal generator 50c outputs the STPCLK# to the CPU 11 to actually reduce the performance of the CPU 11.

As is described above, in the periods of condition 1, condition 2, condition 3 and condition 4, which are determined by the condition determine 50b, the activity of the CPU 11 is relatively low. In other words, the performance of the CPU 11 can be reduced to the degree that turn-around time and through-put are not be deteriorated. The possible reduction in the performance is to the level that ensures the timer signals for I/O port 061h are not mistakenly counted, that ensures the data transfer speed of the HDD 21 can be sufficiently compensated for, or that ensures the polling of the status can be performed. When, for example, the CPU chip 11 is the type that is driven at a clock speed of 133 MHz in the normal mode, and that, by being arranged as is shown in Fig. 10, the operational clock can be decreased to one quarter or one eighth. This means that the power consumption of the CPU 11 can be reduced to one quarter or one eighth of that during the normal operation.

Therefore, when the operation state enters condition 1, condition 2, condition 3 or condition 4, the signal generator 50c needs only to throttle the low/high level of the STPCLK# at the interval at which the operation clock of 1xx MHz is thinned out to one quarter or one eighth.

The hardware arrangement and the software arrangements of the computer system 100 that embodies the present invention have been explained. In this division, the power management of the present invention will be described in association with the operation of the system 100.

An explanation will be given, while referring to Figs. 11(a) and 7(a), for the reduction of the performance of the CPU 11 when it performs a data transfer to the FDD 27.

As is shown in Fig. 11(a), to access the FDD 27, the CPU 11 first transmits a command (for setting a motor-ON bit) to the FDC 26. Then, the CPU 11 (more specifically, the BIOS that controls the hardware) counts a 500 msec delay that is taken to stabilize the rotation of the motor. While the time is being counted by the BIOS, I/O port 061h is sequentially accessed, and the condition determine 50b therefore maintains the condition 1 (see Fig. 7(a)). As a result, the signal generator 50c throttles the STPCLK# at predetermined intervals, so that the performance of the CPU 11 is reduced to one quarter or one eighth of its performance in the normal mode.

The reduction of the performance of the CPU 11 when it accesses the keyboard 29 will now be explained while referring to Figs. 11(b) and 7(a).

As is shown in Fig. 11(b), when the CPU 11 is to access the keyboard 29, the status reading (i.e., the polling of I/O port 064h) of the KMC 28 and the access of I/O port 061h are alternately repeated. The repetition of the two bus cycles continues until the confirmation of the status is successful or until a 2 second period elapses and the status can not be recognized. Therefore, in this handshaking period, as is shown in Fig. 7(a), the condition determine 50b simply reciprocates between condition 1 and condition 2. As a result, the signal generator 50c throttles the STPCLK# at predetermined intervals, and the performance of the CPU 11 is then reduced to one quarter or one eighth of its performance in the normal mode.

The reduction of the performance of the CPU 11 when it performs the data transfer with the HDD 21 will now be explained while referring to Figs. 11(c), 7(b) and 8.

Fig. 8 is a specific diagram illustrating individual phases at the time asynchronous communication is taking place between the CPU 11 and the HDD 21. In the data buffering period that is shaded in Fig. 8, the BIOS performs a timing measurement of 200 msecs, and in the same manner as in D-1, the performance of the CPU 11 can be reduced.

The double shaded portion in Fig. 8 is a data transfer phase. One data transfer phase consists of 256 times of sequential accesses of I/O port 1F0h. While the accessing of the I/O port 1F0h continues, the condition determine 50b maintains condition 3, as is shown in Fig. 7(b). As a result, the signal generator 50c throttles the STPCLK# at predetermined intervals, and the performance of the CPU 11 is reduced to one quarter or one eighth of its performance in the normal mode.

The reduction of the performance of the CPU 11 when it polls the status register of the FDC 26 will now be explained while referring to Figs. 9 and 7(c).

As is shown in Fig. 9, when the CPU 11 transmits a command to the FDC 26, the status reading of the FDC 26 (i.e., the polling of I/O port 3F4h) is repeated in advance. This bus cycle continues until the status is confirmed or until the polling has been repeated at predetermined number of times or more and the routine jumps to an error routine. During such polling, the condition determine 50c maintains condition 4, as is shown in Fig. 7(c). As a result, the signal generator 50c throttles the STPCLK# at predetermined intervals, and the performance of the CPU 11 is reduced to one quarter or one eighth of its performance in the normal mode.

The CPU chip 11 in this embodiment effects power management by reducing the operational clock, or by halting the operation of only one part of the functional unit 11a. However, the present invention is also applicable to a CPU chip of the type that reduces the operational clock for the entire chip or that halts the entire operation can provide the same effect. This would be understood by one having an ordinary skill in the art.

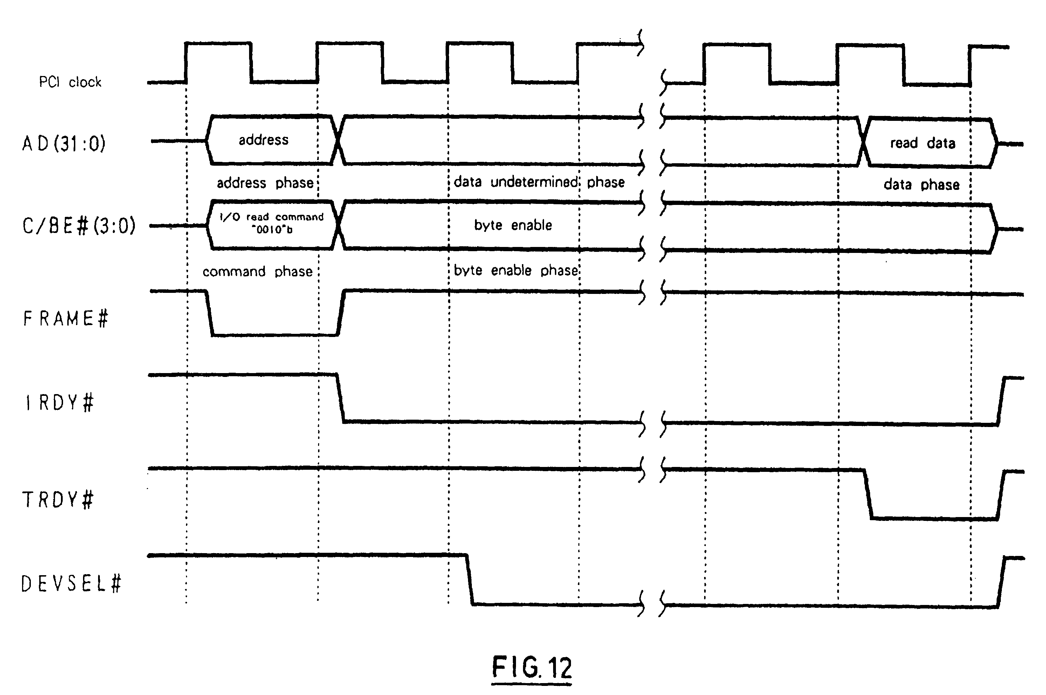

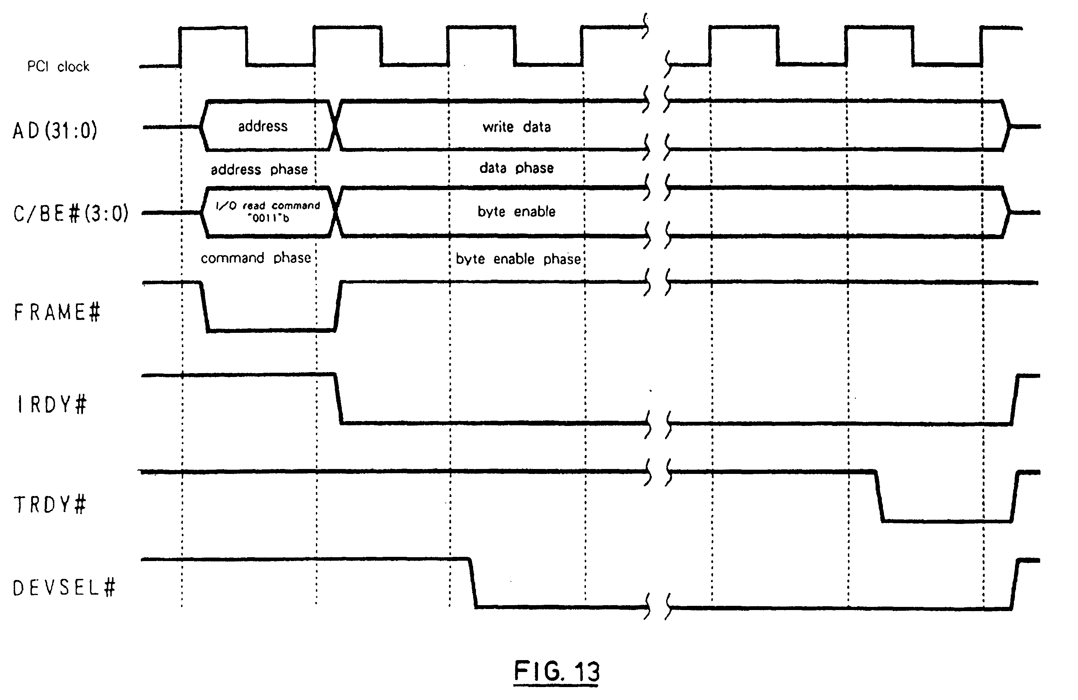

Turning now to the further embodiment of the invention described in connection with Figures 12 to 15, provided that the local bus 16 (Fig. 1) is a PCI bus, when transactions for reading or writing data are performed between an initiator (i.e., a command transmitter) and a target (i.e., a command receiver), a read cycle or a write cycle are generated on the bus 16. Figs. 12 and 13 show the timing charts of read cycle and write cycle respectively. The individual bus cycles will be briefly described.

### Read cycle:

(1) As is shown in Fig. 12, an address/data bus is present in an address phase during a period for a first PCI clock cycle in a read cycle, and an initiator continues to transmit an I/O port address that specifies an access destination. C/BE (Command/Bus Enable) #(3:0) exists in a command phase, and the initiator continues to transmit a value "0010"b that indicate the read cycle. Further, the initiator renders FRAME# active (i.e., pulls it low) to specify the start of a bus cycle.
(2) At the following PCI clock cycle, the initiator returns FRAME# to inactive (i.e., pulls it high). Further, the initiator renders IRDY (Initiator Ready)# active (i.e., pulls it low) when the initiator itself is set to ready.
(3) Then, the address/data bus enters a data undetermined phase. C/BE#(3:0) enters a byte enable phase, and the initiator continues to transmit a byte enable value that indicates a reading byte position in the I/O register. The byte enable value is determined in accordance with the I/O port address, which is an access destination. The relationship between the I/O port address and the byte enable value is shown in Table 1.

**[Table 1]**

| I/O port address | byte enable value |
|---|---|
| 3F8ₕ | 1 1 1 0_{b} |
| 3F9ₕ | 1 1 0 1_{b} |
| 3FAₕ | 1 0 1 1_{b} |
| 3FBₕ | 0 1 1 1_{b} |
| 3FCₕ | 1 1 1 0_{b} |
| 3FDₕ | 1 1 0 1_{b} |
| 3FEₕ | 1 0 1 1_{b} |
| 3BCₕ | 1 1 1 0_{b} |
| 3BDₕ | 1 1 0 1_{b} |
| 3BEₕ | 1 0 1 1_{b} |

(4) When the target recognizes, from the received I/O port address, that the target itself is an access destination, it renders DEVSEL# (Device Select #) active (i.e., pulls it low) to respond.
(5) When the target is set to ready, it renders the TRDY# (Target Ready #) active (i.e., pulls it low). At this time, the address/data bus has entered the data phase, and the target begins to transmit the data via a predetermined I/O port address to the address/data bus.
(6) Then, the IRDY# and the TRDY# are rendered inactive (i.e., pulled high), and the bus cycle is terminated. During the read cycle, the bridge circuit 14, which issues a command instead of the CPU 11 (more specifically, the BIOS) serves as the "initiator". The I/O controller 23, which physically includes a data register and a control/status register for serial transfer and parallel transfer, serves as the "target".

### Write cycle:

(1) As is shown in Fig. 13, an address/data bus is present in an address phase during a period for a first PCI clock cycle during a write cycle, and an initiator continues to transmit an I/O port address that specifies an access destination. C/BE#(3:0) exists in a command phase, and the initiator continues to transmit a value "0011"b in order to indicate the write cycle. Further, the initiator renders FRAME# active (i.e., pulls it low) to specify the start of a bus cycle.
(2) At the following PCI clock cycle, the initiator returns FRAME# to inactive (i.e., pulls it high). Further, the initiator renders IRDY# active (i.e., pulls it low) when the initiator itself is set to ready.
(3) Then, the address/data bus enters a data phase, and the initiator continues to transmit data via the designated I/O port address. C/BE#(3:0) enters a byte enable phase, and the initiator continues to transmit a byte enable value that indicates a writing byte position in the I/O register. The byte enable value is determined in accordance with the I/O port address that indicates an access destination. The relationship between the I/O port address and the byte enable value is the same as is shown in Table 1.
(4) When the target recognizes, from the received I/O port address, that the target itself is an access destination, it renders DEVSEL# active (i.e., pulls it low) to respond.
(5) When the target is set to ready, it renders the TRDY# active (i.e., pulls it low). The target also receives data that are outputted across the address/data bus, and writes the data at a predetermined I/O port address.
(6) Then, the IRDY# and the TRDY# are rendered inactive (i.e., pulled high), and the bus cycle is terminated.
During the write cycle, the bridge circuit 14, which issues a command instead of the CPU 11 (more specifically, the BIOS) serves as the "initiator". The I/O controller 23, which physically includes a data register and a control/status register for serial transfer and parallel transfer, serves as the "target".

As is shown in Figs. 12 and 13, provided that the local bus 16 is a PCI bus, a bus cycle is specified for all address/data buses having a 32-bit width, and 0 to 3 bit control buses C/BE#, FRAME#, IRDY#, TRDY#, and DEVSEL#. Therefore, so long as the bus cycle detector 50a snoops these signal lines, it can detect an access cycle for a desired I/O port address (it should be noted that the address bus and the data bus are multiplexed according to the specifications for the PCI bus).

Specific I/O port address examples in this embodiment are 1) a data port for serial transfer, and 2) an I/O port assigned both to a control register and to a status register for serial transfer. In an IBM PC/AT compatible apparatus, address 3F8h (or either address 2F8h, address 3E8h, or address 2E8h) is assigned to the data port for serial transfer. Address 3F9h to address 3FFh (or, address 2F9h to address 2FFh, address 3E9h to address 3EFh, or address 2F9h to address 2EFh) are assigned to the control/status registers. Other examples of I/O ports are 1) a data port for parallel transfer, and 2) I/O ports assigned either to a control register or a status register for parallel transfer. In an IBM PC/AT compatible apparatus, address 3BCh (or either address 378h or address 278h) is assigned to the data port for parallel transfer. Address 3BDh to address 3BFh (or either address 379h to address 37Fh, or address 279h to address 27Fh) are assigned to the control/status registers. While data transfer is to be performed via a communication port, such as the serial port 24 or the parallel port 25 (or while a commutation application is being executed), the access (including reading and writing) to the data port or the control/status registers are generated (previously described). The reason why the bus cycle detector 50a should detect a bus cycle for accessing these specific I/O ports, and the effect obtained will become obvious during the course of the following explanation.

It would be easily understood by one having ordinary skill of the art that the bus cycle detector 50a for detecting an access cycle for a specific I/O port can be implemented as a hardware circuit.

As is previously described, the state determiner 50b determines how far the performance of the CPU 11 can be currently lowered (i.e., the lowest permissible performance of the CPU 11) in accordance with the notice from the bus cycle detector 50a.

### Shifting requirement:

A event wherein the state of the CPU 11 should be shifted is as follows.

### 1) Access to a data port of a communication port

One example of events that affect the activity of the CPU 11 is an access cycle to a data port of a communication port. More specifically, an event (transition event Tr1) that a predetermined time (T1) has elapsed since a last access cycle to the data port, and an event (transition event Tr3) that the access cycle to the data port occurred affect the activity of the CPU 11. The communication port may be the serial port 24 or the parallel port 25. In an IBM PC/AT compatible apparatus, address I/O port 3F8h (or either address 2F8h, address 3E8h, or address 2E8h) is assigned to the data port, and address 3BCh (or either address 378h or address 278h) is assigned as a data port for both of the ports 24 and 25. The access to the data port frequently occurs during data transfer via the communication port.

### 2) Access to control/status registers of a communication port

Another event that affects the activity of the CPU 11 is an access cycle to the control/status registers of the communication port. More specifically, an event (transition event Tr2) that a predetermined time (T2) has elapsed since a last access cycle to the control/status registers, and an event (transition event Tr4) that the access cycle to the control/status register has occurred affect the activity of the CPU 11. The communication port may be the serial port 24 or the parallel port 25. In an IBM PC/AT compatible apparatus, address 3F9h to address 3FFh of the I/O port (or address 2F9h to address 2FFh, address 3E9h to address 3EFh, or address 2F9h to address 2EFh) are assigned to the control/status registers for the serial port 24. And address 3BDh and address 3BFh (or, address 379h and address 37Fh, or address 279h and address 27Fh) are assigned to the control/status registers for the parallel port 25. The access to the control/status registers occurs before the data transfer is performed via the communication port (i.e., before the communication application is activated), or during the execution of the end process after the data transfer is completed (previously mentioned).

Operational characteristics of the state determiner 50b: The state determiner 50b detects the above described transition events Tr1 through Tr4 to determine the lowest permissible performance of the CPU 11. The transition events Tr3 and Tr4 can be detected from the notices transmitted by the bus cycle detector 50a, as is described above. The transition events Tr1 and Tr2 can be detected by its watch off timer (not shown) that counts the time elapsed since the notices for the Tr3 and Tr4 were received from the bus cycle detector 50a. In accordance with the empirical rules of the present inventors, T1 = 1 sec and T2 = 5 sec seem to be appropriate for the time to be measured.

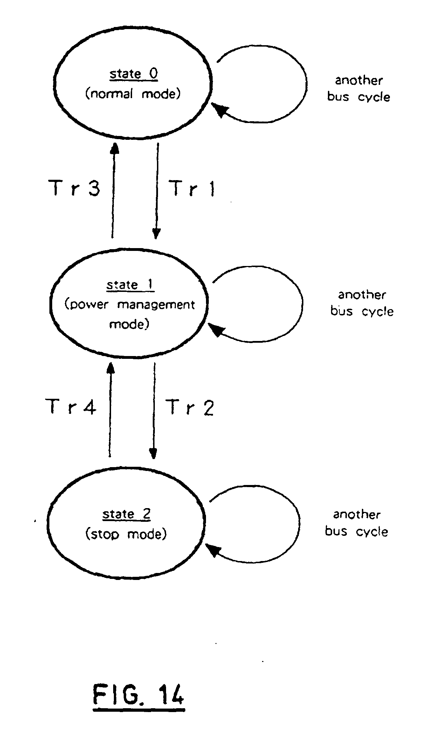

Fig. 14 is a state machine diagram showing the determination contents obtained by the state determiner 50b. The state and the events for transition between the state will now be described.

### State 0:

A state 0 is the state where the CPU 11 is fully active at a high speed clock, and corresponds to the "normal mode".

When the transition event Tr1 is detected in the state 0, the state machine enters to a state 1.
Further, when another bus cycle is detected by the bus cycle detector 50a in the state 0, the state is merely returned to the same state 0.

### State 1:

The state 1 is the state where the performance of the CPU 11 can be lowered to a degree, and corresponds to the "power saving mode" according to the terms in "Claims". The power saving mode may be a slow clock mode of the CPU 11. The permissible level to which the performance is lowered is a level at which there is no deterioration of a turn around time and through-put.
When the transition event Tr1 is detected in the state 0, the state machine enters the state 1, as is described above. When the predetermined time T1 (= 1 sec) has elapsed since a last access cycle to the data port of the communication port, this means that the system 100 is not in a period of data transfer, and activity relative to the communication ports 24 and 25 is only for the initial setup phase or the end process phase. In this case, since the performance of the CPU 11 can be lowered as much as is required for the initial setup or the end process, the state machine therefore enters the state 1.
When the transition event Tr3 is detected in the state 1, the state machine is recovered to the state 0. When the access cycle to the data port of the communication port has occurred, this means that the system 100 enters the data transfer phase. Since the CPU 11 must be fully active during the data transfer in order to process without delay the data to be transferred, the state machine is recovered to the state 0 in order to inhibit the lowering of the performance.
When the transition event Tr2 is detected in the state 1, the state machine further enters a state 2.
Even when another bus cycle is detected by the bus cycle detector 50a in the state 1, the state machine is merely returned to the state 1.

### State 2:

The state 2 is the state where the operation of the CPU 11 can be completely halted. Such a state for the CPU 11 corresponds to the "stop mode". The stop mode may be a stop clock mode wherein the clock controller 60 is activated to halt the input of a clock to the CPU 11. When the transition event Tr2 is detected in the state 1, the state machine further enters the state 2, as is described above. When the predetermined time T2 (= 5 sec) has elapsed since a last access cycle to the control/status register of the communication port, this means that there is no activity relative to the communication ports 24 and 25 because the setup or the cancelling of the control value and the reading of the status are not performed. A delay time (about 1 msec) is required to recover to the normal mode once the CPU 11 is completely halted. However the system never enters the data transfer phase (the state 0) without the initial setup phase (state 1) being passed through. Thus, if the transition event Tr2 is satisfied, the operation of the CPU 11 can be halted.
When the transition event Tr4 is detected in the state 2, the state machine is recovered to the state 1. When the access cycle to the control/status register of the communication port has occurred again, this means that the system 100 has entered the initial setup phase for data transfer. Thus, the state machine is recovered to the state 1 to permit the CPU 11 to operate with a performance that is high enough to perform the initial setup.
Even when another bus cycle is detected by the bus cycle detector 50a in the state 2, the state machine is merely returned to the state 2.

The reason why the state determiner 50b should determine the state as shown in Fig. 14 in response to the access of these specific I/O ports, and the obtained effects will become obvious during the course of the following explanation.

It would be easily understood by one having ordinary skill of the art that the state determiner 50b that is driven according to the state machine diagram in Fig. 6 can be implemented as a hardware circuit.

The signal generator 50c performs throttling of the low/high level of STPCLK# at a predetermined interval to provide an intermittent operating clock for the CPU 11, and thus implements the slow clock mode.

The intermittent operating clock is provided for the CPU 11 to enable it to perform the initial setup for the communication ports 24 and 25, and the end process, while not deteriorating the turn around time and the through-put. For a CPU that is driven at 133 MHz, for example, the operating clock can provide an intermittent operating time that is one fourth or one eighth the normal. This is equivalent to a reduction in the power consumption by the CPU in the slow clock mode to one fourth or one eighth of that in the normal mode.

When the idle state of the CPU 11 is detected, the APM driver calls the APM BIOS, as previously mentioned. The APM BIOS in this embodiment is employed to operate the signal generator 50c. That is, if the APM BIOS is called during the period that the state determiner 50b is in the state 1, the APM BIOS activates the signal generator 50c to shift the CPU 11 to the slow clock mode. From the view of the activities of the communication ports 24 and 25, the lowering of the performance of the CPU 11 does not hinder the operation.

The hardware and software arrangement of the computer system that embodies the present invention have been described above. In this subdivision, the processing of the present invention together with the operation of the system 100 will now be described.

Individual phases during an activation period of a communication application:

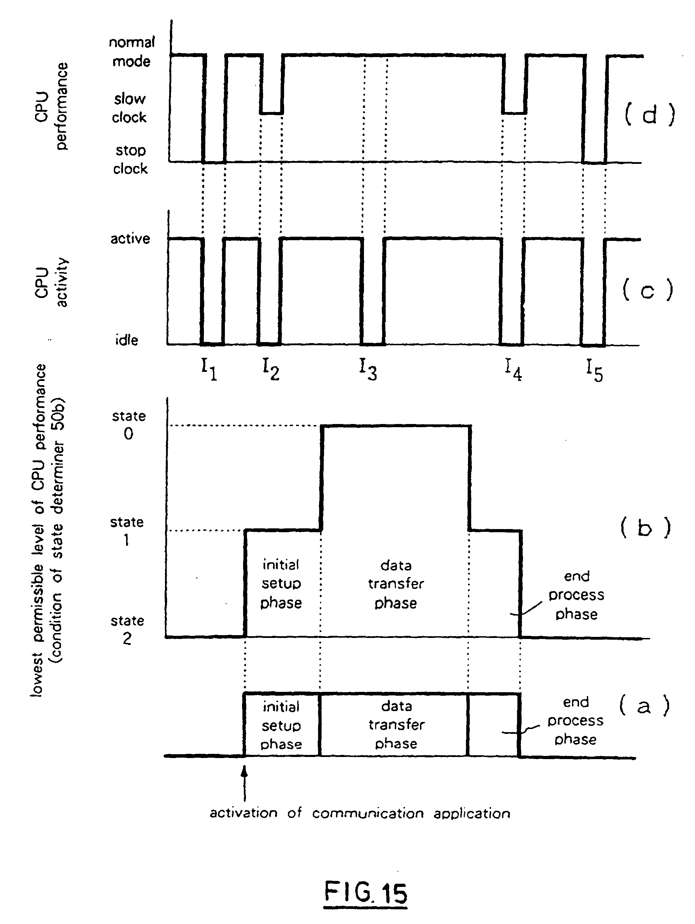

In Fig. 15(a) is shown the further detailed condition of the system 100 while a communication application is being executed. A period where the communication application is activated is divided into the initial setup phase, the data transfer phase, and the end process phase.

In the initial setup phase, control values, such as a baud rate, an IRQ level and an FIFO, are written into the control register of the communication port 24 or 25, or the status register is accessed to perform transactions that recognize the status of the communication port 24 or 25. During this phase period, the I/O ports that are assigned to the control/status registers (address 3F9h to address 3FFh, 2F9h to address 2FFh, address 3E9h to address 3EFh, or address 2F9h to address 2EFh for serial transfer, and address 3BDh to address 3BFh, address 379h to address 37Fh, or address 279h to address 27Fh for parallel transfer) are accessed relatively frequently. The initial setup phase includes a wait time until the data transfer is actually begun.

In the data transfer phase, the input and output of data are actually performed. During this phase period, therefore, the data port of the communication port 24 or 25 (one of address 3F8h, address 2F8h, address 3E8h, and address 2E8h for serial transfer, and one of address 3BCh, address 378h, and address 278h for parallel transfer) are accessed relatively frequently.

In the end process phase, transactions are performed for cancelling the IRQ level reserved at the initial setup and for recognizing the status register of the communication port 24 or 25. In this phase period, the I/O ports (address 3F9h to address 3FFh, address 2F9h to address 2FFh, address 3E9h to address 3EFh, or address 2F9h to address 2EFh for serial transfer, and address 3BDh to address 3BFh, address 379h to address 37Fh, or address 279h to address 27Fh for parallel transfer) are accessed relatively frequently.

In accordance with empirical rules the following facts are established:
(1) When an access to the data port of the communication port 24 or 25 has not occurred for the predetermined time T1 (= 1 sec), this means that the system 100 is not in the data transfer phase.
(2) When an access to the control/status registers of the communication port 24 or 25 has not occurred for the predetermined time T2 (= 5 sec), this means that either the system 100 has completed the end process or the system 100 has not yet entered the initial setup phase.
(3) The data transfer phase is not entered unless the initial setup phase is passed through.

### State of the CPU 11 in each phase:

In Fig. 15(b) is shown the results of the determination (the condition) of the state determiner 50b for each phase.

When there is no access to any I/O port of the communication port 24 or 25, the CPU 11 is permitted to be completely halted from the view point of the activity of the communication port 24 or 25. The state determiner 50b is therefore in the state 2 so that it can specify the effect whereby the stop clock mode for the CPU 11 is permitted.

When the condition enters the initial setup phase, the access cycle (i.e., the transition event Tr4) to the communication port 24 or 25 to the control/status registers occurs. During this period, the CPU 11 must be active, and its performance must at least be higher than that in the slow clock mode in order for the control values to be set, and the status register to be recognized without any problem. Thus, the state determiner 50b enters the state 1 to specify the effect whereby the slow clock mode of the CPU 11 is permitted but the stop clock mode is inhibited. The initial setup phase is also a period wherein the system is expected to enter the data transfer phase.

When the system enters the data transfer phase, the access cycle (i.e., the shifting requirement Tr3) to the data port of the communication port 24 or 25 occurs. During this period, the CPU 11 must be fully active in the normal mode, so that data that are to be transferred at a relatively high speed can be processed without any delay (i.e., without losing any data). Thus, the state determiner 50b enters the state 0 to specify the effect whereby the lowering the performance of the CPU 11 is inhibited. From the state 1, i.e., from the slow clock mode, the CPU 11 can recover to the normal mode without almost any delay.

Following this, the system enters the end process phase. When the predetermined time T1 has elapsed since a last access cycle to the data port of for the communication port 24 or 25, the transition event Tr1 occurs. During this period, only the IRQ level is cancelled and the status register is confirmed. The CPU 11 does not have to be fully active and can be in the slow clock mode. The state determiner 50b enters the state 1 again to indicate that the slow clock mode of the CPU 11 is permitted.

When the system passes through the end process phase, and then the predetermined time T2 has elapsed since a last access cycle to the control/status registers of the communication port 24 or 25, the transition event Tr2 occurs. During this period, the CPU 11 is permitted to be halted completely from the view point of the activity of the communication port 24 or 25. The state determiner 50b enters the state 2 again to indicate the effect whereby the stop clock mode of the CPU 11 is permitted.

### Activity of the CPU 11:

In Fig. 15(c), for convenience sake, is shown an example activity of the CPU 11. The activity of the CPU 11 is performed by the APM driver detecting whether or not an effective task is present in the queue of a schedular, as is previously described. The graph in Fig. 15(c) shows that CPU idle I1, I2, I3, I4 and I5 for the CPU 11 are detected before the communication application is activated, during the initial setup phase, during the data transfer phase, during the end process phase, and after the communication application is completed. In Fig. 15(d) is shown the power management operation of the CPU 11 that is carried out when the activity of the CPU 11 is detected.

When the CPU idle I1 is detected, the state determiner 50b is in the state 2 and the complete stopping of the CPU 11 is permitted. The APM driver, in response to the detection of the I1, can call the APM BIOS. The APM BIOS activates the clock controller 60 to set the CPU 11 in the stop clock mode.

When the CPU idle I2 is detected, the state determiner 50b is in the state 1. The complete stopping of the CPU 11 is inhibited but lowering the performance of the CPU 11 is permitted. The APM driver, in response to the detection of the I2, can call the APM BIOS. The APM BIOS deactivates the clock controller 60 and the activates the signal generator 50b to set the CPU 11 in the slow clock mode. It should be noted that, according to the present invention, the CPU 11 can be set in the slow clock mode even though at this time the system 100 is executing a communication application.

When the CPU idle I3 is detected, the state determiner 50b is in the 2 and even lowering the performance of the CPU 11 is inhibited. The APM driver, in response to the detection of the I3, can not call the APM BIOS, and the CPU 11 remains in the normal mode.

When the CPU idle I4 is detected, the state determiner 50b is in the state 1. The complete stopping of the CPU 11 is inhibited but lowering the performance of the CPU 11 is permitted. The APM driver, in response to the detection of the I4, can call the APM BIOS. The APM BIOS activates the signal generator 50b to set the CPU 11 in the slow clock mode. It should be noted that, according to the present invention, the CPU 11 can be set in the slow clock mode even though at this time the system 100 is executing a communication application.

When the CPU idle I5 is detected, the state determiner 50b is in the state 2 and the complete stopping of the CPU 11 is permitted. The APM driver, in response to the detection of the I5, can call the APM BIOS. The APM BIOS activates the clock controller 60 to set the CPU 11 in the stop clock mode.

The present invention has been described in detail while referring to specific embodiments. However, it should be obvious to one having ordinary skill in the art that various modifications or revisions of the embodiment are possible within the scope of the present invention as defined in the claims. The present invention can be employed for various electric/electronic devices, for example: facsimile apparatuses; various cordless devices, such as portable ratio terminals, cordless telephones, electronic notebooks and portable video cameras; and word processors.

The assignment of I/O port addresses and the IRQ levels, which are described in this specification, conforms to the standards of compatible machines of the IBM PC/AT series.

As a secondary effect that is provided by the present invention, design change software is not required at all. The asynchronous communication between the CPU and the peripheral devices may occur at any time while the CPU is executing the BIOS or an application program. Taking all the conditions into account, it is almost impossible, because of time and economical factors, for the design of all the software that may be installed into the system to be so changed as to "reduce the performance of the CPU chip during the asynchronous communication". In the present invention, a special hardware component, such as a PM-LSI chip, is employed to accomplish the power saving operation for the CPU chip. Thus, the software programs is not needed to be aware of the operating rate of the CPU, and no software design changes are required.

## Claims

1. An information processing system comprising:
a CPU (11) having at least two operation modes, a normal mode and a power saving mode;
at least one peripheral device (21,27);
a bus (16) employed for communication between said CPU and said peripheral device;
bus cycle detection means (50a) for monitoring a bus cycle on said bus;
condition determination means (50b) for determining an operational mode of said CPU in a specific bus cycle that is detected by said bus cycle detection means; and
signal generation means (50c) for providing, to said CPU, a control signal for changing between operational modes in accordance with a determination result by said condition determination means.

2. The information processing system according to claim 1, wherein said bus cycle detection means detects a predetermined bus cycle in which an activity of said CPU is reduced, said condition determination means determines said operational mode of said CPU to be a power saving mode in accordance with the detected result by said detecting means, and, in accordance with said determination result, said signal generation means provides a control signal to cause said CPU to enter a power saving mode.

3. The information processing system according to claim 2, wherein said bus cycle detection means detects a bus cycle for counting the timing of a handshaking operation as said predetermined bus cycle in which the activity of said CPU is reduced.

4. The information processing system according to claim 2, further comprising at least a hard disk drive as said peripheral device, wherein said bus cycle detection means detects a bus cycle in which data port for said hard disk drive is accessed as said predetermined bus cycle in which the activity of said CPU is reduced.

5. The information processing system according to claim 2, further comprising, as said peripheral devices, at least a floppy disk controller and a floppy disk drive, wherein said bus cycle detection means detects a bus cycle in which a status register of said floppy disk controller is accessed as said predetermined bus cycle in which the activity of said CPU is reduced.

6. The information processing system according to claim 3, wherein, in accordance with a detection of said bus cycle, said condition determination means shifts the operational mode of said CPU to a power saving mode, and inhibits a return to a normal mode until a bus cycle other than said previously detected bus cycle is detected twice in succession.

7. The information processing system according to claim 4 or claim 5 wherein said condition determination means shifts the operational mode of said CPU to said power saving mode, in accordance with said detection result for said bus cycle, and returns said operating mode to said normal mode when another bus cycle is detected.

8. The information processing system according to any preceding claim wherein said power saving mode is an operating mode in which a frequency of an operational clock for at least one unit part inside said CPU is reduced or an operation is halted.

9. An information processing system as claimed in any preceding claim in which said CPU also has a stop mode in which operation is completely halted; the system further comprising a communication port (24,25), physically connectable to another independent apparatus, for performing data transfer;
state determination means for determining an operational mode of said CPU in response to a detection by said bus cycle of access of said communication port;
said signal generation means providing, when said state determination means ascertains that said operational mode is to be the power saving mode, a control signal to said CPU to set said CPU to the power saving mode; and
CPU operation halting means for completely halting an operation of said CPU when said state determination means ascertains that said operational mode is to be the stop mode.

10. The information processing system according to claim 9, wherein said state determination means determines that said operational mode should be the power saving mode when a first predetermined time has elapsed since a last bus cycle for accessing the data port of said communication port during the normal mode.

11. The information processing system according to claim 9, wherein said state determination means determines that said operational mode should be the stop mode when a second predetermined time has elapsed since a last bus cycle for setting or cancelling a control value for data transfer via said communication port during the power saving mode.

12. The information processing system according to claim 9, wherein said state determination means determines that said operational mode should be the normal mode upon the occurrence of a bus cycle for accessing a data port of said communication port during the power saving mode.

13. The information processing system according to claim 9, wherein said state determination means determines that said operational mode is to be the power saving mode upon the occurrence of a bus cycle for setting or cancelling a control value for said data transfer via said communication port during the stop mode.

14. The information processing system according to any one of claims 9 to 13 further comprising: power saving control means for activating either said signal generation means or said CPU operation halting means in accordance with both a monitoring result obtained by said CPU monitoring means and a determination result obtained by said state determination means.

15. The information processing system according to claim 14, wherein, during a period that said state determination means permits said CPU to enter to the power saving mode, said power saving control means activates said signal generation means in response to the detection by said CPU monitoring means that said CPU is idle.

16. The information processing system according to claim 14, wherein, during a period that said state determination means permits said CPU to enter the stop mode, said power saving control means activates said CPU operation halting means in response to the detection by said CPU monitoring means that said CPU is idle.

17. The information processing system according to claim 14, wherein, during a period that said state determination means inhibits said CPU from entering the power saving mode, said power saving control means does not activate said signal generation means regardless of the detection by said CPU monitoring means that said CPU is idle.

18. The information processing system according to claim 14, wherein, during a period that said state determination means inhibits said CPU from entering the stop mode, said power saving control means does not activate said CPU operation halting means regardless of the detection by said CPU monitoring means that said CPU is idle.

## Patentansprüche

1. Datenverarbeitungssystem, welches Folgendes umfasst:
eine CPU (11) mit mindestens zwei Betriebsmodi, einem Normalmodus und einem Stromsparmodus;
mindestens eine Peripherieeinheit (21, 27);
einen für den Datenverkehr zwischen der CPU und der Peripherieeinheit verwendeten Bus (16);
ein Buszykluserkennungsmittel (50a) zur Überwachung eines Buszyklus des Busses;
ein Zustandsbestimmungsmittel (50b) zum Festlegen eines Betriebsmodus der CPU in einem bestimmten Buszyklus, der durch das Buszykluserkennungsmittel erkannt wird; und
ein Signalerzeugungsmittel (50c) zum Bereitstellen eines Steuersignals für die CPU zum Wechsel zwischen den Betriebsmodi gemäß einem durch das Zustandsbestimmungsmittel gelieferten Bestimmungsergebnis.

2. Datenverarbeitungssystem nach Anspruch 1, bei dem das Buszykluserkennungsmittel einen vorgegebenen Buszyklus erkennt, in dem die Aktivität der CPU verringert wird, bei der das Zustandsbestimmungsmittel gemäß dem durch das Erkennungsmittel erkannten Ergebnis als Betriebsmodus der CPU einen Stromsparmodus festlegt wird und bei dem entsprechend dem Bestimmungsergebnis das Signalerzeugungsmittel ein Steuersignal bereitstellt, damit sich die CPU in einen Stromsparmodus begibt.

3. Datenverarbeitungssystem nach Anspruch 2, bei dem das Buszykluserkennungsmittel einen Buszyklus zum Abzählen des Verlaufs einer Handshakingoperation als denjenigen vorgegebenen Buszyklus erkennt, in dem die Aktivität der CPU eingeschränkt wird.

4. Datenverarbeitungssystem nach Anspruch 2, welches femer als Peripherieeinheit mindestens ein Festplattenlaufwerk umfasst und bei welchem das Buszykluserkennungsmittel einen Buszyklus, in dem auf den Datenanschluss des Festplattenlaufwerks zugegriffen wird, als denjenigen vorgegebenen Buszyklus erkennt, in welchem die Aktivität der CPU eingeschränkt wird.

5. Datenverarbeitungssystem nach Anspruch 2, welches ferner mindestens eine Diskettenlaufwerksteuereinheit und ein Diskettenlaufwert als Peripherieeinheiten umfasst und bei welchem das Buszykluserkennungsmittel einen Buszyklus, bei dem auf ein Statusregister der Diskettenlaufwerksteuereinheit zugegriffen wird, als denjenigen vorgegebenen Buszyklus erkennt, in welchem die Aktivität der CPU eingeschränkt wird.

6. Datenverarbeitungssystem nach Anspruch 3, bei welchem das Zustandsbestimmungsmittel entsprechend einer Erkennung des Buszyklus den Betriebsmodus der CPU in einen Stromsparmodus versetzt und die Rückkehr in den Normalmodus so lange verhindert, bis ein anderer Buszyklus als der zuvor erkannte Buszyklus zweimal nacheinander erkannt wird.

7. Datenverarbeitungssystem nach Anspruch 4 oder Anspruch 5, bei welchem das Zustandsbestimmungsmittel entsprechend dem Erkennungsergebnis für diesen Buszyklus den Betriebsmodus der CPU in den Stromsparmodus versetzt und den Betriebsmodus erst dann wieder in den Normalmodus zurückversetzt, wenn ein anderer Buszyklus erkannt wird.

8. Datenverarbeitungssystem nach einem der vorangehenden Ansprüche, bei welchem der Stromsparmodus ein Betriebsmodus ist, in welchem eine Frequenz eines Arbeitstaktes für mindestens eine Untereinheit innerhalb der CPU verringert oder eine Operation unterbrochen wird.

9. Datenverarbeitungssystem nach einem der vorangehenden Ansprüche, bei welchem die CPU auch einen Anhaltemodus aufweist, in dem die Operation vollständig unterbrochen wird;
wobei das System femer Folgendes aufweist:
einen Datenanschluss (24, 25) zur Datenübertragung, der physisch mit einer anderen unabhängigen Vorrichtung verbunden werden kann;
ein Zustandsbestimmungsmittel zum Festlegen eines Betriebsmodus der CPU als Reaktion auf eine Erkennung des Zugriffs auf den Datenanschluss mittels des Buszyklus;
das Signalerzeugungsmittel, welches ein Steuersignal für die CPU bereitstellt, um diese in den Stromsparmodus zu versetzen, wenn das Zustandsbestimmungsmittel bestätigt, dass der Betriebsmodus in den Stromsparmodus versetzt werden soll; und
ein Unterbrechungsmittel für den CPU-Betrieb, um eine Operation der CPU vollständig zu unterbrechen, wenn das Zustandsbestimmungsmittel bestätigt, dass der Betriebsmodus der Anhaltemodus sein soll.

10. Datenverarbeitungssystem nach Anspruch 9, bei welchem das Zustandsbestimmungsmittel festlegt, dass der Betriebsmodus der Stromsparmodus sein soll, wenn seit einem letzten Buszyklus zum Zugreifen auf den Datenanschluss zur Datenübertragung während des Normalmodus eine erste vorgegebene Zeitspanne vergangen ist.

11. Datenverarbeitungssystem nach Anspruch 9, bei welchem das Zustandsbestimmungsmittel festlegt, dass der Betriebsmodus der Anhaltemodus sein soll, wenn seit einem letzten Buszyklus zum Einstellen oder Löschen eines Steuerwertes für die Datenübertragung über den Datenanschluss während des Stromsparmodus eine zweite vorgegebene Zeitspanne vergangen ist.

12. Datenverarbeitungssystem nach Anspruch 9, bei welchem das Zustandsbestimmungsmittel festlegt, dass der Betriebsmodus der Normalmodus sein soll, wenn während des Stromsparmodus ein Buszyklus zum Zugriff auf den Datenanschluss aufgetreten ist.

13. Datenverarbeitungssystem nach Anspruch 9, bei welchem das Zustandsbestimmungsmittel festlegt, dass der Betriebsmodus der Stromsparmodus sein soll, wenn während des Anhaltemodus ein Buszyklus zum Einstellen oder Löschen eines Steuerwertes zur Datenübertragung über den Datenanschluss aufgetreten ist.

14. Datenverarbeitungssystem nach einem der Ansprüche 9 bis 13, welches femer Folgendes umfasst:
ein Stromsparsteuermittel zum Aktivieren entweder des Signalerzeugungsmittels oder des Unterbrechungsmittels für den CPU-Betrieb sowohl entsprechend einem durch das CPU-Überwachungsmittel gewonnenen Überwachungsergebnis als auch einem durch das Zustandsbestimmungsmittel gewonnenem Bestimmungsergebnis.

15. Datenverarbeitungssystem nach Anspruch 14, bei welchem das Stromsparsteuermittel während einer Zeitspanne, während der das Zustandsbestimmungsmittel der CPU das Einnehmen des Stromsparmodus ermöglicht, das Signalerzeugungsmittel als Reaktion auf die Erkennung durch das CPU- Überwachungsmittel, dass die CPU sich im Leerlauf befindet, aktiviert.

16. Datenverarbeitungssystem nach Anspruch 14, bei welchem das Stromsparsteuermittel während einer Zeitspanne, während der das Zustandsbestimmungsmittel der CPU das Einnehmen des Anhaltemodus ermöglicht, das Unterbrechungsmittel für den CPU-Betrieb als Reaktion auf die Erkennung durch das CPU-Überwachungsmittel, dass sich die CPU im Leerlauf befindet, aktiviert.

17. Datenverarbeitungssystem nach Anspruch 14, bei welchem das Stromsparsteuermittel während einer Zeitspanne, während der das Zustandsbestimmungsmittel die CPU am Einnehmen des Stromsparmodus hindert, das Signalerzeugungsmittel auch dann nicht aktiviert, wenn das CPU-Überwachungsmittel erkennt, dass sich die CPU im Leerlauf befindet.

18. Datenverarbeitungssystem nach Anspruch 14, bei welchem das Stromsparsteuermittel während einer Zeitspanne, während der das Zustandsbestimmungsmittel die CPU am Einnehmen des Anhaltemodus hindert, das Unterbrechungsmittel des CPU- Betriebs auch dann nicht aktiviert, wenn das CPU- Überwachungsmittel erkennt, dass sich die CPU im Leerlauf befindet.

## Revendications

1. Un système de traitement d'information, comprenant :
une CPU (11), ayant au moins deux modes de fonctionnement, un mode normal et un mode d'économie de puissance ;
au moins un dispositif périphérique (21, 27) ;
un bus (16), utilisé pour la communication entre ladite CPU et ledit dispositif périphérique ;
des moyens de détection de cycle de bus (50a), pour surveiller un cycle de bus sur ledit bus ;
des moyens de détermination de conditions (50b) pour déterminer un mode opérationnel de ladite CPU, dans un cycle de bus spécifique, détecté par lesdits moyens de détection de cycle de bus ; et
des moyens de génération de signal (50c), pour fournir, à ladite CPU, un signal de contrôle pour changer entre des modes opérationnels, selon un résultat de détermination obtenu par lesdits moyens de détermination de condition.

2. Le système de traitement d'information selon la revendication 1, dans lequel lesdits moyens de détection de cycle de bus détectent un cycle de bus prédéterminé, dans lequel une activité de ladite CPU est réduite, lesdits moyens de détermination de condition déterminent ledit mode opérationnel de ladite CPU, pour qu'il soit un mode d'économie de puissance selon le résultat détecté par lesdits moyens de détection, et, selon ledit résultat de détermination, lesdits moyens de génération de signal produisent un signal de contrôle pour faire entrer ladite CPU en mode d'économie de puissance.

3. Le système de traitement d'information selon la revendication 2, dans lequel lesdits moyens de détection de cycle de bus détectent un cycle de bus pour compter l'écoulement temporel d'une opération d'échange protocolaire, à titre dedit cycle de bus prédéterminé, dans lequel l'activité de ladite CPU est réduite.

4. Le système de traitement d'information selon la revendication 2, comprenant en outre au moins une unité à disque dur, faisant office de dit dispositif périphérique, dans lequel lesdits moyens de détection de cycles de bus détectent un cycle de bus, dans lequel un port de données, pour ladite unité à disque dur, est l'objet d'accès lors dudit cycle de bus prédéterminé, dans lequel l'activité de ladite CPU est réduite.

5. Le système de traitement d'information selon la revendication 2, comprenant en outre, à titre de dits dispositifs périphériques, au moins un contrôleur à disquettes et une unité à disquettes, dans lequel lesdits moyens de détection de cycles de bus détectent un cycle de bus, dans lequel un registre d'état dudit contrôleur de disquettes est l'objet d'accès lors dudit cycle de bus prédéterminé, dans lequel l'activité de ladite CPU est réduite.

6. Le système de traitement d'information selon la revendication 3, dans lequel, selon une détection dudit cycle de bus, lesdits moyens de détermination de condition produisent un passage du mode opérationnel de ladite CPU en mode d'économie de puissance, et empêchent le retour à un mode normal, jusqu'à ce qu'un cycle de bus, autre que ledit cycle de bus antérieurement détecté, soit détecté à deux reprises successives.

7. Le système de traitement d'information selon la revendication 4 ou la revendication 5, dans lequel lesdits moyens de détermination de condition effectuent le passage du mode opérationnel de ladite CPU audit mode d'économie de puissance, selon ledit résultat de détection pour ledit cycle de bus, et fait revenir ledit mode opérationnel audit mode normal, lorsqu'un autre cycle de bus est détecté.

8. Le système de traitement d'information selon l'une quelconque des revendications précédentes, dans lequel ledit mode d'économie de puissance est un mode opérationnel, dans lequel une fréquence d'une horloge opérationnelle, pour au moins une partie unitaire à l'intérieur de ladite CPU, est réduite ou bien une opération est stoppée.

9. Le système de traitement d'information selon l'une quelconque des revendications précédentes, dans laquelle ladite CPU présente également un mode d'arrêt, dans lequel l'opération est complètement stoppée ; le système comprenant en outre un port de communication (24, 25), susceptible d'être connecté physiquement à un autre dispositif indépendant, afin d'effectuer un transfert de données ;
des moyens de détermination d'état, pour déterminer un mode opérationnel de ladite CPU, en réponse à une détection par ledit cycle de bus de l'accès du port de communication ;
lesdits moyens de génération de signal, fournissant, lorsque lesdits moyens de détermination d'état s'assurent que ledit mode opérationnel doit être le mode d'économie de puissance, un signal de commande à ladite CPU, pour placer ladite CPU au mode d'économie de puissance ; et
des moyens d'arrêt d'opération de la CPU, pour stopper complètement une opération de ladite CPU lorsque lesdits moyens de détermination d'état s'assurent du fait que ledit mode opérationnel doit être le mode d'arrêt.

10. Le système de traitement d'information selon la revendication 9, dans lequel lesdits moyens de détermination d'état déterminent que le mode opérationnel devrait être le mode d'économie de puissance lorsqu'une première durée prédéterminée s'est écoulée depuis un dernier cycle de bus pour l'accès du port de données dudit port de communication, durant le mode normal.

11. Le système de traitement d'information selon la revendication 9, dans lequel lesdits moyens de détermination d'état déterminent que ledit mode opérationnel devrait être le mode d'arrêt lorsqu'une deuxième durée prédéterminée a expiré, depuis un dernier cycle de bus pour fixer ou annuler une valeur de contrôle pour le transfert des données, via ledit port de communication, durant le mode d'économie de puissance.

12. Le système de traitement d'information selon la revendication 9, dans lequel lesdits moyens de détermination d'état déterminent que ledit mode opérationnel devrait être le mode normal, à l'occurrence d'un cycle de bus, pour établir l'accès d'un port de données dudit port de communication, durant le mode d'économie de puissance.

13. Le système de traitement d'information selon la revendication 9, dans lequel lesdits moyens de détermination d'état déterminent que ledit mode opérationnel doit être le mode d'économie de puissance à l'occurrence d'un cycle de bus pour fixer ou annuler une valeur de contrôle pour ledit transfert de données, via ledit port de communication, durant le mode d'arrêt.

14. Le système de traitement d'information selon l'une quelconque des revendications 9 à 13, comprenant en outre :
des moyens de contrôle d'économie de puissance pour activer soit lesdits moyens de génération de signal, soit lesdits moyens de cessation d'opérations de la CPU, selon à la fois soit un résultat de surveillance, obtenu par lesdits moyens de surveillance de CPU, soit un résultat de détermination, obtenu par lesdits moyens de détermination d'état.

15. Le système de traitement d'information selon la revendication 14, dans lequel, durant une période à laquelle lesdits moyens de détermination d'état autorisent ladite CPU à entrer en mode d'économie de puissance, lesdits moyens de commande d'économie de puissance activent lesdits moyens de génération de signal, en réponse à la détection, par lesdits moyens de surveillance de la CPU, du fait que ladite CPU est en attente.

16. Le système de traitement d'information selon la revendication 14, dans lequel, durant une période pendant laquelle lesdits moyens de détermination d'état permettent à ladite CPU d'entrer en mode d'arrêt, lesdits moyens de commande d'économie de puissance activent lesdits moyens d'arrêt d'opération de CPU, en réponse à la détection, par lesdits moyens de surveillance de la CPU, du fait que ladite CPU est en attente.

17. Le système de traitement d'information selon la revendication 14, dans lequel, durant une période pendant laquelle lesdits moyens de détermination d'état empêchent ladite CPU d'entrer en mode d'économie de puissance, lesdits moyens de commande d'économie de puissance n'activent pas lesdits moyens de génération de signal, indépendamment de la détection, par lesdits moyens de surveillance de la CPU, du fait que ladite CPU est en attente.

18. Le système de traitement d'information selon la revendication 14, dans lequel, durant une période pendant laquelle lesdits moyens de détermination d'état empêchent ladite CPU d'entrer en mode d'arrêt, lesdits moyens de commande d'économie de puissance n'activent pas lesdits moyens d'arrêt d'opération de CPU, indépendamment de la détection, par lesdits moyens de surveillance de la CPU, du fait que ladite CPU est en attente.
